# EUROPEAN PATENT APPLICATION

(11) **EP 4 036 775 A1**
(43) Date of publication of application: **03.08.2022**
(21) Application number: 19951495.1
(22) Date of filing: 08.11.2019
(51) Int. Cl.: G06F 21/62

(54) **DATA PROCESSING METHOD AND APPARATUS, AND SYSTEM CHIP**

(71) Applicant: HUAWEI TECHNOLOGIES CO., LTD., Shenzhen, Guangdong 518129 (CN)
(72) Inventor: PAN, Shilin, Shenzhen, Guangdong 518129 (CN); XIN, Guizhen, Shenzhen, Guangdong 518129 (CN)
(74) Representative: MERH-IP Matias Erny Reichl Hoffmann Patentanwälte PartG mbB
(86) International application number: PCT/CN2019/116616
(87) International publication number: WO 2021/087956

(57) **Abstract**

A data processing method and apparatus (1400), and a chip system (100) are provided. The chip system (100) includes a system bus, at least one processor (1410) coupled to the system bus, a secure element (40) coupled to the chip system (100), a first memory (1430), and a second memory (1440). The first memory (1430) and the second memory (1440) are different memories other than the secure element (40). In the method, an architecture and a procedure design in which an SE integrated into an SOC is used to support a security service of a mobile phone system are proposed for the first time, so that a security system of a chip at a high security level is applied to data protection of a device such as a mobile phone. The SE integrates functions such as a biometric authentication password service, a password verification service, a password matching and verification service, a file encryption service, a root of trust service, a high-security storage service, and an anti-rollback service, to implement a security service in the SE, and store data of different security services, and to improve a security level and user experience.

## Description

### TECHNICAL FIELD

This application relates to the data processing field, and more specifically, to a data processing method and apparatus, and a system on chip.

### BACKGROUND

As a most widely used electronic device, a mobile phone plays an increasingly important role in mobile electronic commerce with wide application of the Internet and continuous improvement of performance of the mobile phone. In the future, the mobile phone needs to implement various functions such as a bank card, a bus card, a key, and an identity card. To implement these functions, a mobile phone chip needs to provide a solution with hardware-level security.

In an existing security storage of the mobile phone, an external or built-in secure element (secure element, SE), which is provided in a form of a chip, is used to integrate an SE chip into a product board of the mobile phone. An SE chip at a highest security level protects data of an application such as finance, a bus card, and a key. However, in a process in which a user uses an electronic device such as a mobile phone, security of various types of application data, such as a personal identification number (personal identification number, pin) of the user, biometric feature template protection, a file system key, and a device certificate (a public-private key pair), does not have a protection solution at a higher security level. As a user and a manufacturer increase a system security requirement for personal data in an electronic device such as a mobile phone, a secure storage implementation process is urgently needed, so that the personal data stored in the mobile phone is also protected by using a chip at a highest security level.

### SUMMARY

This application provides a data processing method and apparatus, and a system on chip, to implement a security service in a secure element, and store data of different security services, thereby improving a security level and user experience.

According to a first aspect, a data processing apparatus is provided, including: at least one processor, configured to: provide a trusted execution environment TEE, and obtain a first security service request by using an application programming interface API of the TEE, where the first security service request is used to request a first security service; and a secure element, configured to: obtain the first security service request from the at least one processor; execute the first security service in response to the first security service request to obtain security data; when the security data includes first security data, store the first security data in a first memory outside the data processing apparatus; and when the security data includes second security data, store the second security data in a second memory outside the data processing apparatus, where the first security data includes recoverable data, the second security data includes unrecoverable data, and the first memory and the second memory are different memories.

With reference to the first aspect, in some implementations of the first aspect, the first security service includes at least one of a biometric authentication password service, a password verification service, a key management and calculation service, a root of trust service, an anti-rollback service, or a high-security storage service.

According to the data processing apparatus, an architecture and a procedure design in which an SE (which is referred to as inSE) integrated into a system on chip (system on chip, SOC) is used to support a security service of a mobile phone system are proposed for the first time, so that a chip security system at a high security level is applied to data protection of a device such as a mobile phone. Specifically, the secure element SE is enabled to integrate functions such as a biometric authentication password service, a password matching and verification service, a key management and calculation service, a file encryption service, a root of trust service, a high-security storage service, and an anti-rollback service, to implement a security service in the SE, store a certificate, and store data of different security services, thereby improving a security level and user experience.

In the foregoing technical solution, a biometric authentication function may be integrated into the SE to support security verification of a device such as a mobile phone, thereby improving use security of the device.

With reference to the first aspect and the foregoing implementation, in some implementations of the first aspect, the second memory includes a plurality of areas, and when storing the second security data in the second memory outside the data processing apparatus, the secure element is configured to store the second security data in an area in the plurality of areas that corresponds to the first security service.

In different security services, a plurality of possible data area management manners for a secure flash are provided, and a plurality of sub-areas are obtained through division to store data of different security services. For example, for the anti-rollback service, anti-rollback data is stored, a crucial key and device certificate are stored, high-security data is stored, data of a third-party application is stored, and so on. The SE is combined with a security-level chip to improve a security level and user experience.

With reference to the first aspect and the foregoing implementation, in some implementations of the first aspect, the first security service includes the anti-rollback service, the security data includes the second security data, the second security data includes an identifier and a count value of the anti-rollback service, the count value is used to determine a quantity of hardware attacks, and an area in the plurality of areas that corresponds to the anti-rollback service further includes a first sub-area and a second sub-area. The secure element is specifically configured to: determine the identifier and the count value of the anti-rollback service; and store the identifier of the anti-rollback service in the first sub-area, and store the count value in the second sub-area.

For the anti-rollback service, an anti-rollback value is stored in a secure flash. In an anti-rollback data area of the secure flash, all applications have different application identifiers (4 bytes or 8 bytes), and each application has a 4-byte counter value (monotonic counter), that is, 4-byte counter space.

When a specific application invokes an anti-rollback service API of a TEE 20, an application identifier (for example, an application ID) is input to search the anti-rollback data area of the secure flash for the application identifier. If the application identifier already exists, the application identifier is found, a corresponding counter value is increased by 1, and the value is returned to the application. Alternatively, if the application identifier does not exist, a new application identifier is added, an application identifier field is set to an ID of the application, and a counter is set 1. Therefore, the application has a secure counter for preventing a hardware attack to prevent the application from being attacked.

With reference to the first aspect and the foregoing implementation, in some implementations of the first aspect, the first security service includes the biometric authentication password service, the security data includes the first security data and the second security data, the first security data includes ciphertext, and the second security data includes a first key and a message authentication code MAC value. The secure element is specifically configured to: obtain biometric feature information of a first user; encrypt the biometric feature information by using the first key to obtain the ciphertext; determine the MAC value based on the biometric feature information; and store the ciphertext in the first memory, and store the first key and the MAC value in an area in the plurality of areas that corresponds to the biometric authentication password service.

With reference to the first aspect and the foregoing implementation, in some implementations of the first aspect, the first security service includes the high-security storage service, the security data includes the second security data, the second security data includes identification information of a data segment of the high-security storage service, length information of the data segment, and content of the data segment, and an area in the plurality of areas that corresponds to the high-security storage service further includes a first sub-area, a second sub-area, and a third sub-area. The secure element is specifically configured to: determine the identification information, the length information, and the content of the data segment; and store the identification information in the first sub-area, store the length information in the second sub-area, and store the content in the third sub-area.

For the high-security storage service, data of the high-security storage service is stored in a secure flash, to prevent the data from being rewritten or leaking after being attacked, and prevent the data from being erased. A high-security data storage area in the secure flash may include N sub-areas, and each sub-area includes identification information (4 bytes), data length information (2 bytes), and a valid data storage area that are of each data segment. When a specific application obtains its own data, identification information and length information of a data segment are input, and the high-security data service transmits valid data to a TA of a TEE for use, and then delivers the valid data to the application, to prevent the valid data from being attacked by hardware.

With reference to the first aspect and the foregoing implementation, in some implementations of the first aspect, the first memory is a memory shared by the secure element and the at least one processor, and the second memory is a dedicated secure memory of the secure element.

According to the data writing and data reading method provided in this application, an architecture and a procedure design in which an SE integrated into an SOC is used to support a security service of a mobile phone system are proposed for the first time, so that a security system of a chip at a high security level is applied to data protection of a device such as a mobile phone. Specifically, the secure element SE is enabled to integrate functions such as a biometric authentication password service, a password matching and verification service, a key management and calculation service, a file encryption service, a root of trust service, a high-security storage service, and an anti-rollback service, to implement a security service in the SE, and store a certificate for invoking by a TEE TA.

In addition, in different security services, a plurality of possible data area management manners for a secure flash are provided, and a plurality of sub-areas are obtained through division to store data of different security services. For example, for the anti-rollback service, anti-rollback data (each application has 4 bytes) is stored, a crucial key and device certificate are stored, high-security data is stored, data of a third-party application is stored, and so on. The SE is combined with a security-level chip to improve a security level and user experience.

According to a second aspect, a data processing apparatus is provided, including: at least one processor, configured to: provide a trusted execution environment TEE, and obtain a first security service request by using an application programming interface API of the TEE, where the first security service request is used to request a first security service; and a secure element, configured to: obtain the first security service request from the at least one processor; when security data required by the first security service includes first security data, obtain the first security data from a first memory outside the data processing apparatus; when the security data required by the first security service includes second security data, obtain the second security data from a second memory outside the data processing apparatus; and execute the first security service, where the first security data includes recoverable data, the second security data includes unrecoverable data, and the first memory and the second memory are different memories.

With reference to the second aspect, in some implementations of the second aspect, the first security service includes at least one of a biometric authentication password service, a password verification service, a key management and calculation service, a root of trust service, an anti-rollback service, or a high-security storage service.

With reference to the second aspect and the foregoing implementation, in some implementations of the second aspect, the second memory includes a plurality of areas, and when obtaining the second security data from the second memory outside the data processing apparatus, the secure element is configured to obtain the second security data from an area in the plurality of areas that corresponds to the first security service.

With reference to the second aspect and the foregoing implementation, in some implementations of the second aspect, the first security service includes the anti-rollback service, and the security data includes the second security data, where the second security data includes an identifier and a count value of the anti-rollback service, the count value is used to determine a quantity of hardware attacks, and an area in the plurality of areas that corresponds to the anti-rollback service further includes a first sub-area and a second sub-area. The secure element is specifically configured to: obtain the identifier of the anti-rollback service from the first sub-area, and obtain the count value from the second sub-area.

With reference to the second aspect and the foregoing implementation, in some implementations of the second aspect, the first security service includes the biometric authentication password service, the security data includes the first security data and the second security data, the first security data includes ciphertext, and the second security data includes a first key and a message authentication code MAC value. The secure element is specifically configured to: obtain the ciphertext from the first memory, and obtain the first key and the MAC value from the second memory; decrypt the ciphertext based on the first key to obtain biometric feature information of a first user; verify integrity of the biometric feature information based on the MAC value to obtain a verification result; when the verification result is that the biometric feature information is complete, determine, based on the biometric feature information and biometric feature information that is entered by a to-be-verified user, whether the to-be-verified user is the first user; and when the to-be-verified user is the first user, biometric authentication verification succeeds; or when the to-be-verified user is not the first user, biometric authentication verification fails.

With reference to the second aspect and the foregoing implementation, in some implementations of the second aspect, the first security service includes the high-security storage service, the security data includes the second security data, the second security data includes identification information of a data segment of the high-security storage service, length information of the data segment, and content of the data segment, and an area in the plurality of areas that corresponds to the high-security storage service further includes a first sub-area, a second sub-area, and a third sub-area. The secure element is specifically configured to: obtain the identification information from the first sub-area, obtain the length information from the second sub-area, and obtain the content of the data segment from the third sub-area.

With reference to the second aspect and the foregoing implementation, in some implementations of the second aspect, the first memory is a memory shared by the secure element and the at least one processor, and the second memory is a dedicated secure memory of the secure element.

According to a third aspect, a data processing method is provided, including: obtaining a first security service request, where the first security service request is used to request a first security service; executing the first security service in response to the first security service request to obtain security data; when the security data includes first security data, storing the first security data in a first memory; and when the security data includes second security data, storing the second security data in a second memory, where the first security data includes recoverable data, the second security data includes unrecoverable data, and the first memory and the second memory are different memories.

With reference to the third aspect, in some implementations of the third aspect, the first security service includes at least one of a biometric authentication password service, a password verification service, a key management and calculation service, a root of trust service, an anti-rollback service, or a high-security storage service.

With reference to the third aspect and the foregoing implementation, in some implementations of the third aspect, the second memory includes a plurality of areas, and the storing the second security data in a second memory includes: storing the second security data in an area in the plurality of areas that corresponds to the first security service.

With reference to the third aspect and the foregoing implementation, in some implementations of the third aspect, the first security service includes the anti-rollback service, the security data includes the second security data, the second security data includes an identifier and a count value of the anti-rollback service, the count value is used to determine a quantity of hardware attacks, and an area in the plurality of areas that corresponds to the anti-rollback service further includes a first sub-area and a second sub-area. The storing the second security data in a second memory includes: storing the identifier of the anti-rollback service in the first sub-area, and storing the count value in the second sub-area.

With reference to the third aspect and the foregoing implementation, in some implementations of the third aspect, the first security service includes the biometric authentication password service, the security data includes the first security data and the second security data, the first security data includes ciphertext, and the second security data includes a first key and a message authentication code MAC value. The executing the first security service to obtain security data includes: obtaining biometric feature information of a first user; encrypting the biometric feature information by using the first key to obtain the ciphertext; and determining the MAC value based on the biometric feature information. The storing the first security data in a first memory and storing the second security data in a second memory includes: storing the ciphertext in the first memory, and storing the first key and the MAC value in an area in the plurality of areas that corresponds to the biometric authentication password service.

With reference to the third aspect and the foregoing implementation, in some implementations of the third aspect, the first security service includes the high-security storage service, the security data includes the second security data, the second security data includes identification information of a data segment of the high-security storage service, length information of the data segment, and content of the data segment, and each of the plurality of areas that corresponds to the high-security storage service further includes a first sub-area, a second sub-area, and a third sub-area. The executing the first security service to obtain security data includes: determining the identification information, the length information, and the content of the data segment. The storing the second security data in a second memory includes: storing the identification information in the first sub-area, storing the length information in the second sub-area, and storing the content in the third sub-area.

With reference to the third aspect and the foregoing implementation, in some implementations of the third aspect, the first memory is a memory shared by a secure element and at least one processor, and the second memory is a dedicated secure memory of the secure element.

According to a fourth aspect, a data processing method is provided, including: obtaining a first security service request, where the first security service request is used to request a first security service; when security data required by the first security service includes first security data, obtaining the first security data from a first memory; when the security data required by the first security service includes second security data, obtaining the second security data from a second memory; and executing the first security service, where the first security data includes recoverable data, the second security data includes unrecoverable data, and the first memory and the second memory are different memories.

With reference to the fourth aspect, in some implementations of the fourth aspect, the first security service includes at least one of a biometric authentication password service, a password verification service, a key management and calculation service, a root of trust service, an anti-rollback service, or a high-security storage service.

With reference to the fourth aspect and the foregoing implementation, in some implementations of the fourth aspect, the second memory includes a plurality of areas, and the obtaining the second security data from a second memory includes: obtaining the second security data from an area in the plurality of areas that corresponds to the first security service.

With reference to the fourth aspect and the foregoing implementation, in some implementations of the fourth aspect, the first security service includes the anti-rollback service, and the security data includes the second security data, where the second security data includes an identifier and a count value of the anti-rollback service, the count value is used to determine a quantity of hardware attacks, and an area in the plurality of areas that corresponds to the anti-rollback service further includes a first sub-area and a second sub-area. The obtaining the second security data from a second memory includes: obtaining the identifier of the anti-rollback service from the first sub-area, and obtaining the count value from the second sub-area.

With reference to the fourth aspect and the foregoing implementation, in some implementations of the fourth aspect, the first security service includes the biometric authentication password service, the security data includes the first security data and the second security data, the first security data includes ciphertext, and the second security data includes a first key and a message authentication code MAC value. The executing the first security service includes: decrypting the ciphertext based on the first key to obtain biometric feature information of a first user; verifying integrity of the biometric feature information based on the MAC value to obtain a verification result; when the verification result is that the biometric feature information is complete, determining, based on the biometric feature information and biometric feature information that is entered by a to-be-verified user, whether the to-be-verified user is the first user; and when the to-be-verified user is the first user, biometric authentication verification succeeds; or when the to-be-verified user is not the first user, biometric authentication verification fails.

With reference to the fourth aspect and the foregoing implementation, in some implementations of the fourth aspect, the first security service includes the high-security storage service, the security data includes the second security data, the second security data includes identification information of a data segment of the high-security storage service, length information of the data segment, and content of the data segment, and an area in the plurality of areas that corresponds to the high-security storage service further includes a first sub-area, a second sub-area, and a third sub-area. The obtaining the second security data from a second memory includes: obtaining the identification information from the first sub-area, obtaining the length information from the second sub-area, and obtaining the content of the data segment from the third sub-area.

With reference to the fourth aspect and the foregoing implementation, in some implementations of the fourth aspect, the first memory is a memory shared by a secure element and at least one processor, and the second memory is a dedicated secure memory of the secure element.

According to a fifth aspect, a secure element is provided, including: an obtaining module, configured to obtain a first security service request, where the first security service request is used to request a first security service; and a processing module, configured to: execute the first security service in response to the first security service request to obtain security data; when the security data includes first security data, store the first security data in a first memory; and when the security data includes second security data, store the second security data in a second memory, where the first security data includes recoverable data, the second security data includes unrecoverable data, and the first memory and the second memory are different memories.

With reference to the fifth aspect, in some implementations of the fifth aspect, the first security service includes at least one of a biometric authentication password service, a password verification service, a key management and calculation service, a root of trust service, an anti-rollback service, or a high-security storage service.

With reference to the fifth aspect and the foregoing implementation, in some implementations of the fifth aspect, the second memory includes a plurality of areas, and the processing module is specifically configured to store the second security data in an area in the plurality of areas that corresponds to the first security service.

With reference to the fifth aspect and the foregoing implementation, in some implementations of the fifth aspect, the first security service includes the anti-rollback service, the security data includes the second security data, the second security data includes an identifier and a count value of the anti-rollback service, the count value is used to determine a quantity of hardware attacks, and an area in the plurality of areas that corresponds to the anti-rollback service further includes a first sub-area and a second sub-area. The processing module is specifically configured to: store the identifier of the anti-rollback service in the first sub-area, and store the count value in the second sub-area.

With reference to the fifth aspect and the foregoing implementation, in some implementations of the fifth aspect, the first security service includes the biometric authentication password service, the security data includes the first security data and the second security data, the first security data includes ciphertext, and the second security data includes a first key and a message authentication code MAC value. The processing module is configured to: obtain biometric feature information of a first user; encrypt the biometric feature information by using the first key to obtain the ciphertext; determine the MAC value based on the biometric feature information; and store the ciphertext in the first memory, and store the first key and the MAC value in an area in the plurality of areas that corresponds to the biometric authentication password service.

With reference to the fifth aspect and the foregoing implementation, in some implementations of the fifth aspect, the first security service includes the high-security storage service, the security data includes the second security data, the second security data includes identification information of a data segment of the high-security storage service, length information of the data segment, and content of the data segment, and each of the plurality of areas that corresponds to the high-security storage service further includes a first sub-area, a second sub-area, and a third sub-area. The processing module is configured to: determine the identification information, the length information, and the content of the data segment; and store the identification information in the first sub-area, store the length information in the second sub-area, and store the content in the third sub-area.

With reference to the fifth aspect and the foregoing implementation, in some implementations of the fifth aspect, the first memory is a memory shared by the secure element and at least one processor, and the second memory is a dedicated secure memory of the secure element.

According to a sixth aspect, a secure element is provided, including: an obtaining module, configured to obtain a first security service request, where the first security service request is used to request a first security service; when security data required by the first security service includes first security data, the obtaining module obtains the first security data from a first memory; and when the security data required by the first security service includes second security data, the obtaining module obtains the second security data from a second memory; and a processing module, configured to execute the first security service, where the first security data includes recoverable data, the second security data includes unrecoverable data, and the first memory and the second memory are different memories.

With reference to the sixth aspect, in some implementations of the sixth aspect, the first security service includes at least one of a biometric authentication password service, a password verification service, a key management and calculation service, a root of trust service, an anti-rollback service, or a high-security storage service.

With reference to the sixth aspect and the foregoing implementation, in some implementations of the sixth aspect, the second memory includes a plurality of areas, and the obtaining module is specifically configured to obtain the second security data from an area in the plurality of areas that corresponds to the first security service.

With reference to the sixth aspect and the foregoing implementation, in some implementations of the sixth aspect, the first security service includes the anti-rollback service, and the security data includes the second security data, where the second security data includes an identifier and a count value of the anti-rollback service, the count value is used to determine a quantity of hardware attacks, and an area in the plurality of areas that corresponds to the anti-rollback service further includes a first sub-area and a second sub-area. The obtaining module is specifically configured to: obtain the identifier of the anti-rollback service from the first sub-area, and obtain the count value from the second sub-area.

With reference to the sixth aspect and the foregoing implementation, in some implementations of the sixth aspect, the first security service includes the biometric authentication password service, the security data includes the first security data and the second security data, the first security data includes ciphertext, and the second security data includes a first key and a message authentication code MAC value. The processing module is specifically configured to: decrypt the ciphertext based on the first key to obtain biometric feature information of a first user; verify integrity of the biometric feature information based on the MAC value to obtain a verification result; when the verification result is that the biometric feature information is complete, determine, based on the biometric feature information and biometric feature information that is entered by a to-be-verified user, whether the to-be-verified user is the first user; and when the to-be-verified user is the first user, biometric authentication verification succeeds; or when the to-be-verified user is not the first user, biometric authentication verification fails.

With reference to the sixth aspect and the foregoing implementation, in some implementations of the sixth aspect, the first security service includes the high-security storage service, the security data includes the second security data, the second security data includes identification information of a data segment of the high-security storage service, length information of the data segment, and content of the data segment, and an area in the plurality of areas that corresponds to the high-security storage service further includes a first sub-area, a second sub-area, and a third sub-area. The obtaining module is specifically configured to: obtain the identification information from the first sub-area, obtain the length information from the second sub-area, and obtain the content of the data segment from the third sub-area.

With reference to the sixth aspect and the foregoing implementation, in some implementations of the sixth aspect, the first memory is a memory shared by the secure element and at least one processor, and the second memory is a dedicated secure memory of the secure element.

According to a seventh aspect, a data processing apparatus is provided, including a trusted execution environment TEE module and a secure running environment module of a secure element SE. The TEE module communicates with the secure running environment module by using an application programming interface API, the TEE module can obtain a first security service request, and send the first security service request to the secure running environment module by using the API, where the first security service request is used to request a first security service. In response to the first security service request, the secure running environment module performs the data processing method in any one of the third aspect or the possible implementations of the third aspect and in any one of the fourth aspect or the possible implementations of the fourth aspect.

According to an eighth aspect, a secure element is provided, including a processor and an interface. The interface is coupled to the processor. The processor is configured to implement a function in the foregoing aspect, for example, executing at least one of a biometric authentication password service, a password verification service, a key management and calculation service, a root of trust service, an anti-rollback service, or a high-security storage service, or performing another data processing process.

In a possible design, the secure element further includes a memory, and the memory is configured to store necessary program instructions and data. When the program instructions and the data are executed, the secure element is enabled to perform the data processing method in any one of the third aspect or the possible implementations of the third aspect and in any one of the fourth aspect or the possible implementations of the fourth aspect.

According to a ninth aspect, a system on chip is provided, and the chip system includes the data processing apparatus in any one of the first aspect or the possible implementations of the first aspect and in any one of the second aspect or the possible implementations of the second aspect.

According to a tenth aspect, a data processing device is provided. The data processing device includes the data processing apparatus in any one of the first aspect or the possible implementations of the first aspect and in any one of the second aspect or the possible implementations of the second aspect. The data processing apparatus includes at least one processor, a secure element, a first memory, and a second memory, where the first memory and the second memory are different memories.

In a possible design, the first memory is a memory shared by the secure element and the at least one processor, and the second memory is a dedicated secure memory of the secure element.

According to an eleventh aspect, an apparatus is provided, including: at least one processor, a plurality of programs, a secure element, a first memory, and a second memory. The first memory and the second memory are different memories other than the secure element, and the plurality of programs include instructions. When the instructions are executed by the apparatus, the apparatus is enabled to perform the method in any one of the first aspect or the possible implementations of the first aspect and in any one of the second aspect or the possible implementations of the second aspect.

According to a twelfth aspect, an apparatus is provided, and the apparatus may be a terminal device or a chip disposed in the terminal device. The apparatus includes a processor coupled to a memory. The processor may be configured to execute instructions in the memory, to implement the data processing method in any one of the third aspect or the possible implementations of the third aspect and in any one of the fourth aspect and the possible implementations of the fourth aspect. Optionally, the apparatus further includes the memory. Optionally, the apparatus further includes an interface, and the processor is coupled to the interface.

According to a thirteenth aspect, a computer program product is provided. The computer program product includes computer program code, and when the computer program code is run on a computing device or a secure element, the computing device or the secure element is enabled to perform the data processing method in any one of the third aspect or the possible implementations of the third aspect and in any one of the fourth aspect and the possible implementations of the fourth aspect.

According to a fourteenth aspect, a computer-readable storage medium is provided. The computer-readable storage medium stores program code or computer instructions, and when the computer program code or the computer instructions are run on a computing device or a secure element, the computing device or the secure element is enabled to perform the data processing method in any one of the third aspect or the possible implementations of the third aspect and in any one of the fourth aspect and the possible implementations of the fourth aspect.

According to a fifteenth aspect, a system on chip is provided, and the system on chip includes a processor, configured to support a terminal device in implementing a function in the foregoing aspect, for example, writing data, performing encryption, performing decryption, reading data, or performing another operation of processing data and/or information in the foregoing method. In a possible design, the system on chip further includes a memory, and the memory is configured to store program instructions and data that are necessary for the terminal device. The system on chip may include a chip, or may include a chip and another discrete device.

### BRIEF DESCRIPTION OF DRAWINGS

FIG. 1 is a schematic diagram of an architecture of a possible chip design;
FIG. 2 is a schematic diagram of a system architecture of an example of an electronic device;
FIG. 3 is a schematic diagram of an example of a system architecture according to this application;
FIG. 4 is a schematic diagram of an example of a data processing method according to an embodiment of this application;
FIG. 5 is a schematic diagram of an example of a data storage process according to an embodiment of this application;
FIG. 6 is a schematic diagram of data processing in a password verification service process according to an embodiment of this application;
FIG. 7 is a schematic diagram of data processing in a biometric authentication password service process according to an embodiment of this application;
FIG. 8 is a schematic diagram of an example of division of an anti-rollback data area according to an embodiment of this application;
FIG. 9 is a schematic diagram of an example of division of a high-security data storage area according to an embodiment of this application;
FIG. 10 is a schematic diagram of another example of a data processing method according to an embodiment of this application;
FIG. 11 is a schematic diagram of composition of an example of a secure element SE 40 according to an embodiment of this application;
FIG. 12 is a schematic diagram of composition of an example of a secure element 40 according to an embodiment of this application;
FIG. 13 is a schematic diagram of composition of an example of a data processing apparatus according to an embodiment of this application;
FIG. 14 is a schematic diagram of composition of another example of a data processing apparatus according to an embodiment of this application; and
FIG. 15 is a schematic diagram of composition of an example of an electronic device according to an embodiment of this application.

### DESCRIPTION OF EMBODIMENTS

The following describes the technical solutions in embodiments of this application with reference to the accompanying drawings in embodiments of this application.

In the description of embodiments of this application, the terms "first" and "second" are merely intended for description, and shall not be understood as an indication or implication of relative importance or implicit indication of a quantity of indicated technical features. Therefore, a feature limited by "first" or "second" may explicitly or implicitly include one or more features. In the description of embodiments, unless otherwise specified, "a plurality of' means at least two.

In addition, in the description of embodiments of this application, terms such as "part", "module", "system" that are used are used to indicate a terminal device-related entity, hardware, firmware, combination of hardware and software, software, or software in execution. It should be understood that division of manners, cases, types, and embodiments in embodiments of this application are only for ease of description, but should not constitute any special limitation, and features in various manners, types, cases, and embodiments may be combined when there is no contradiction.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

It should be noted that the term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects. The term "at least one" means one or more. The term "at least one of A and B", similar to the term "A and/or B", describes an association relationship between associated objects and represents that three relationships may exist. For example, at least one of A and B may represent the following three cases: Only A exists, both A and B exist, and only B exists.

A data processing method provided in embodiments of this application may be applied to a terminal device. The terminal device may also be referred to as user equipment (User Equipment, UE), an access terminal, a subscriber unit, a subscriber station, a mobile station, a mobile, a remote station, a remote terminal, a mobile device, a user terminal, a terminal, a wireless communications device, a user agent, a user apparatus, or the like. The terminal device in embodiments of this application may be a mobile phone (mobile phone), a tablet computer (Pad), a computer with a wireless transceiver function, a virtual reality (Virtual Reality, VR) terminal device, an augmented reality (Augmented Reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. An application scenario is not limited in embodiments of this application. In this application, the foregoing terminal device and the chip that may be disposed in the foregoing terminal device are collectively referred to as a terminal device.

Alternatively, in embodiments of this application, the terminal device may be a terminal device in an Internet of Things (Internet of Things, IoT) system. IoT is an important composition part of information technology development in the future, and has a main technical feature in which things are connected to a network by using a communications technology to implement a man-machine connected and thing-thing connected intelligent network.

In embodiments of this application, a smartphone most widely used in life is used as an example for detailed description. When using a smartphone, in addition to having a requirement for continuous improvement in a camera, audio, a video, and smartphone performance, a user also has an increasingly high requirement for mobile phone security of mobile payment, mobile finance, and the like that are related to the smartphone. In addition, that the smartphone serves as a security application such as a vehicle key, a bank card, or the like that carries property gradually becomes a demand. The mobile phone may collect all bank cards, bus cards, keys, and identity cards in the future. To implement these functions, in addition to requiring support of various types of corresponding software development, a mobile phone chip is more required to provide hardware-level security.

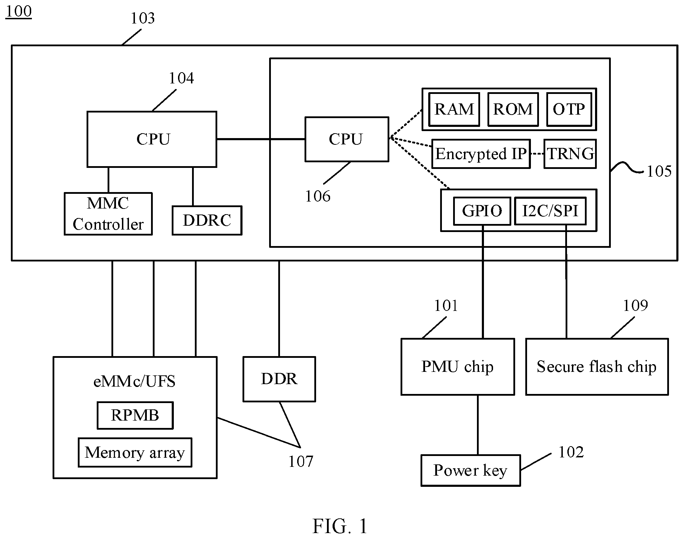

FIG. 1 is a schematic diagram of an architecture of a possible chip design. In a chip system 100 shown in FIG. 1, a secure element (secure element, SE) 105 is built into a main chip 103 that includes an application processor (application processor, AP), and therefore the main chip may be referred to as AP. In FIG. 1, the main chip AP 103 may also be referred to as a system on chip (system on chip, SOC). The chip system 100 may include the following parts.

### (1) Power management unit (power management unit, PMU) chip 101

It should be understood that the chip system 100 may include a power management unit, and the power management unit may integrate all power management functions of the chip system 100 to supply power to a plurality of chips in the chip system 100. The PMU chip 101 is a main element in the power management unit, to implement the following functions: resetting the chip system 100, controlling a phase locked loop and a frequency divider in the chip system 100, identifying and decoding a pin signal of one or more chips in the chip system 100, controlling a sleep mode in the chip system 100, performing power management on a module in the chip system 100, and so on. The power management unit may be logically connected to a processor, such as a CPU 104, in the chip system 100, so that the processor implement, by using the power management unit, functions such as charging management, discharging management, and power consumption management.

In FIG. 1, general-purpose input/output (general-purpose input/output, GPIO) interfaces of the PMU chip 101 and the SE 105 are connected, to implement a security key function. Generally, a power key 102 of an electronic device is connected to the PMU chip 101. When the power key is pressed, the PMU chip 101 receives interruption information, and sends the interruption to the SE 105 by using the GPIO interface to indicate that a hardware key is triggered.

### (2) Main chip 103

The main chip 103 is the foregoing system on chip SOC, and is a chip of an integrated circuit. A logical core in the main chip 103 includes a central processing unit (central processing unit, CPU) 105, a clock circuit, a timer, an interruption controller, a serial and parallel interface, another peripheral device, an input/output (input/output, I/O) sub-system port, and glue logic used between various IP cores. A memory core includes various memories such as a volatile memory, a non-volatile memory (non-volatile memory, NVM), and a Cache. The main chip 103 may further include an analog core, and the analog core includes an analog to digital converter (analog to digital converter, ADC), a digital to analog converter (digital to analog converter, DAC), a phase locked loop (phase locked loop, PLL), and some analog circuits used in a high speed circuit.

### (3) Central processing unit 104

The CPU 104 is a control center of the SOC 103, that is, a control center of a terminal device, and is connected to all parts of the entire terminal device by using various interfaces and lines, and performs various functions of the terminal device and processes data by running or executing a software program and/or module that are/is stored in a memory and invoking data stored in the memory, to implement overall monitoring on the terminal device.

Optionally, a processor, such as the CPU 104, may include one or more processing units. Preferably, the processor may be integrated with an application processor and a modem processor. The application processor mainly processes an operating system, a user interface, an application program, and the like, and the modem processor mainly processes wireless communication. It may be understood that the foregoing modem processor may be not integrated into the processor.

The CPU 104 may optionally include an operator and a controller and is a core part of the system on chip 103, and is configured to obtain an instruction and process data. Specifically, the CPU 104 may be configured to: control an instruction execution sequence, control an operation, control time, perform an arithmetic operation and a logical operation on data, process other information, and so on.

### (4) Storage component 107

The storage component may include an embedded multimedia storage (embedded Multi Media Card, eMMC), a universal flash storage (universal flash storage, UFS), a double data rate (Double Data Rate, DDR) synchronous dynamic random access memory, and the like. Specifically, the eMMC or the UFS includes, for example, a memory array (memory array) and a chip-level independent storage area (replay protected memory block, RPMB). The RPMB is a relatively special partition of the eMMC, and is mainly used to store some core sensitive data.

The storage component 107 may be further configured to store a software program and a module. A processor, such as the CPU 104, performs various functional applications of the terminal device and processes data by running the software program and the module that are stored in the storage component. The storage component further includes a program storage area and a data storage area, for example, a read-only memory (read-only memory, ROM) and a random access memory (random access memory, RAM) in the chip system 100. The program storage area may store an operating system, an application program required by at least one function (such as a sound play function or an image play function), and the like. The data storage area may store data (such as audio data or a phone book) or the like created based on use of the terminal device. In addition, the storage component may further include a high-speed random access memory, and may further include a non-volatile memory (non-volatile memory, NVM) such as at least one magnetic disk storage component, a flash memory component, or another volatile solid-state storage component.

### (5) Secure flash chip 109

The secure flash chip 109 is a secure storage chip that has an initial key binding relationship with the SE 105, and may implement secure storage of data, but usually has small storage space, for example, about dozens of KB to hundreds of KB. Optionally, in the chip system 100, a dedicated secure flash chip may be used, or an independent SE chip may undertake a function of the secure flash chip, or the secure flash is integrated into the SE 105. Logical costs of the dedicated secure flash chip are lower than those of the independent SE chip.

### (6) Another input device

The another input device 330 may be configured to: receive input digit or character information, and generate a key signal input related to a user setting and function control of the terminal device 300.

In addition to the modules listed above, the chip system 100 further includes another unit or module shown or not shown, such as an encryption/decryption logic circuit. For example, the system on chip may include a radio frequency (radio frequency, RF) circuit for receiving and sending a signal in a process of receiving and sending information or a call process. The RF circuit usually includes but is not limited to an antenna, at least one amplifier, a transceiver, a coupler, a low noise amplifier (low noise amplifier, LNA), a duplexer, and the like. In addition, the RF circuit may further communicate with another device such as a network device through wireless communication. The wireless communication may use any communications standard or protocol, including but not limited to a wireless local area network (wireless local area networks, WLAN), a global system for mobile communications (global system of mobile communication, GSM) system, a code division multiple access (code division multiple access, CDMA) system, a wideband code division multiple access (wideband code division multiple access, WCDMA) system, a general packet radio service (general packet radio service, GPRS), a Long Term Evolution (long term evolution, LTE) system, an LTE frequency division duplex (frequency division duplex, FDD) system, LTE time division duplex (time division duplex, TDD), a universal mobile telecommunications system (universal mobile telecommunication system, UMTS), a worldwide interoperability for microwave access (worldwide interoperability for microwave access, WiMAX) communications system, and a future fifth generation (5th generation, 5G) system or a new radio (new radio, NR).

For another example, the chip system 100 may further include a near field communication (near filed communication, NFC) controller. The NFC controller may be a chip. Based on a single chip, an induction card reader, an induction card, and a point-to-point function are combined to identify a compatible device and exchanged data with the compatible device in a short distance. An NFC chip has a mutual communications capability and has a computing capability, and may further include an encryption logic circuit, an encryption/decryption module, and the like.

For another example, the chip system 100 may further include a multimedia storage (multi media card, MMC) controller, a double data rate controller (double data rate controller, DDRC), and the like that makes a storage unit and a controller in the system on chip 103 together. Details are not described herein.

In the chip system 100, the SE 105 is a secure element built into an electronic device, and the secure element can improve a security level of the electronic device. For example, the SE 105 may be a security module integrated into the main chip SOC 103 of a mobile phone, and the SE 105 includes a CPU 106, a storage component, an interface device, and the like. The system on chip 103 in which the SE 105 is built into the SOC 103 of the terminal device may be referred to as an inSE system, and the system can improve a security level of the mobile phone. Specifically, for example, in a password storage process, the SE 105 may manage or deliver a key factor, to provide security protection for private data or information of a user. In a data backup process, the SE 105 may create a security domain (security domain). Data in the security domain may be encrypted and then uploaded to an application layer for backup, to improve data security in the backup process. In a mobile payment process, the SE 150 may rely on a trusted service manager (trusted service manager, TSM), is a platform applied to a mobile network operator or a financial institution, and may provide a user with a platform of remotely issuing various industry smart cards and managing cooperation relationships. Specifically, the SE 105 may receive TSM management, and discover and download card applications such as bank cards, access cards, bus cards, membership cards, and coupons through the electronic device, to perform payment anytime and anywhere through the mobile phone to enjoy a secure and convenient mobile payment service.

It should be understood that in the inSE system architecture, the central processing unit CPU 104 of the SOC 103 controls the SE 105, which specifically includes controlling opening and closing of the SE 105, controlling power consumption or a working status, and so on. In addition, as a core of the system on chip 103, the CPU 104 may control some other components in the system on chip 103. This is not limited in this embodiment. The secure element SE 105 is usually provided in a form in which the SE 105 is embedded inside the SOC 103, and may run a smart card application program to prevent an external malicious resolution attack, thereby protecting data security.

As shown in FIG. 1, the SE 105 may have a complete CPU, ROM, RAM, and the like. An internal structure of the SE 105 is briefly described below. As shown in FIG. 1, as an element, the SE 105 also includes elements or structures similar to most of the foregoing elements or structures in the SOC 103. For example, the SOC 103 may include the following parts.

### (1) Central processing unit CPU 106

The CPU 106 is connected to all parts inside the system on chip or outside the chip by using various functions and lines, and performs various functions and data processing operations by running or executing a software program and/or module that are/is stored in a memory and invoking data stored in the memory. Optionally, the CPU 106 may include one or more processing units.

The CPU 106 may optionally include an operator and a controller and is a core part of the SE 105, and is configured to obtain an instruction and process data. Specifically, the CPU 106 may be configured to: control an instruction execution sequence, control an operation, control time, perform an arithmetic operation and a logical operation on data, process other information, and so on.

In the chip system 100, the CPU 106 of the secure element SE may be communicatively connected to the CPU 104 of the system on chip SOC 103, and the central processing unit CPU 104 of the system on chip SOC 103 controls the secure element SE 105, including controlling opening and closing of the SE 105, controlling power consumption or a working status, and so on.

### (2) Storage component

The storage component may be configured to store data, a software program, and a module. The CPU 106 performs various functional applications and processes data by running the software program and the module that are stored in the storage component. The storage component further includes a program storage area and a data storage area, for example, the ROM and the RAM that are shown in the SE 105. In addition, the SE 105 further includes a one time programmable (one time programmable, OTP) memory.

### (3) General purpose input/output (general purpose input/output, GPIO) interface

The GPIO interface may be used for input, output, or another special function. The GPIO interface may be connected to one or more registers, and outputs a high potential or a low potential by writing a specific register. The GPIO interface may be configured by using software. The GPIO interface may be configured as a control signal, or may be configured as a data signal. In some embodiments, the GPIO interface may be configured to connect to another part of a device, such as a processor, a wireless communications module, an audio module, a sensor module, or the like. The GPIO interface may be further configured as another type of an inter-integrated circuit (inter-integrated circuit, I2C) interface, an inter-integrated circuit sound (inter-integrated circuit sound, I2S) interface, a universal asynchronous receiver/transmitter (universal asynchronous receiver/transmitter, UART) interface, a mobile industry processor interface (mobile industry processor interface, MIPI), or the like. Details are not described herein.

### (4) Crypto IP encapsulation (crypto IP encapsulation, CIPE)

CIPE uses an encrypted IP packet. A CIPE packet is provided with target header information, and is encrypted by using a default CIPE encryption mechanism.

### (5) Random number generator (true random number generator, TRNG)

The random number generator is a device that generates a random number by using a physical process rather than a computer program.

Based on the foregoing description, the SE 105 may include a CPU, a RAM, a ROM, an OTP, and a password algorithm engine (Crypto IP). In addition, the SE 105 is connected to an external device by using the GPIO interface and a peripheral device interface (inter-integrated circuit, I2C) or a serial peripheral interface (serial peripheral interface, SPI). The SE 105 communicates with the main CPU 104 by using a shared RAM, and the OTP stores a key of the SE, such as an HUK and another Key.

Composition of the chip system 100 of the inSE and communication between the parts are briefly described above. In the security solution of the inSE chip system, the SE 105 can be integrated into the main chip 103, so that an attack from a physical layer can be better prevented, and the inSE chip system has higher security.

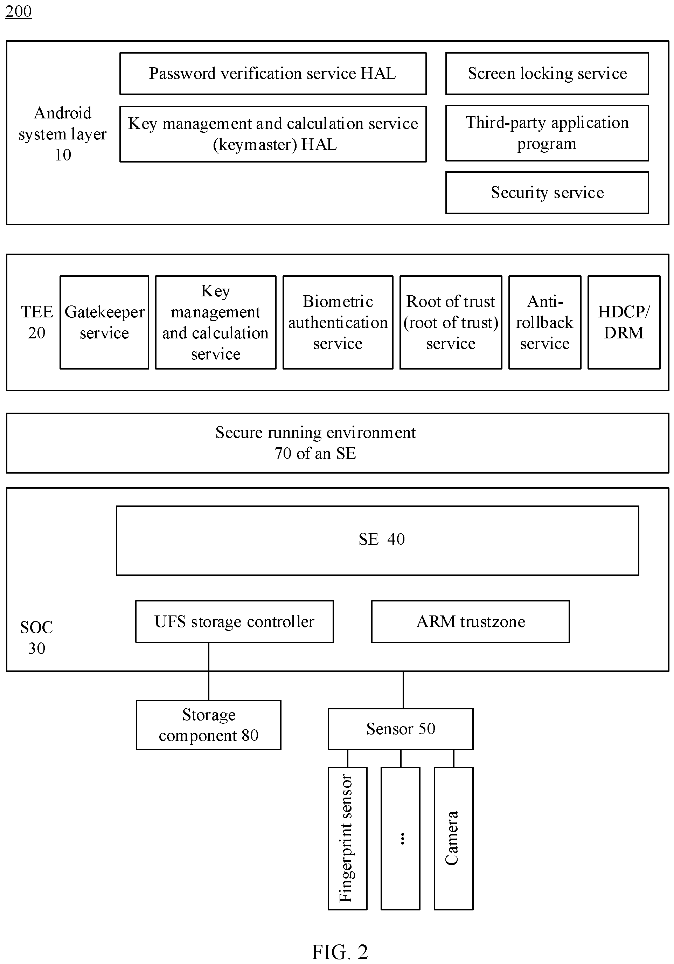

FIG. 2 is a schematic diagram of a system architecture of an example of an electronic device. A mobile phone is used as an example. A system architecture 200 of the mobile phone may be divided into several layers. Each layer has a clear role and task, and the layers communicate with each other by using a software interface. As shown in FIG. 2, the system architecture 200 of the mobile phone may include an Android system layer 10, a trusted execution environment (trusted execution environment, TEE) 20, a chip SOC 30, an SE 40 and a secure running environment 70 of the SE, a sensor 50, a storage component 80, and the like. The following briefly describes components, modules, and concepts related to the system architecture.

### 1. Android system layer 10

The Android system layer 10 provides a rich execution environment (rich execution environment, REE) for the electronic device, that is, provides a running environment and various services for various application programs of the electronic device. As shown in FIG. 2, the Android system layer 10 may provide a screen locking service, a file encryption service, third-party application program running, and the like for the electronic device.

For a current hardware abstract layer (hardware abstract layer, HAL), it may be considered that Android defines a structure framework of the HAL layer and accesses hardware by using several interfaces, thereby unifying an invoking manner. For a password verification service, a key management and calculation service (keymaster HAL), a screen locking service, a third-party application program, and another security service that are listed in FIG. 2, the Android system layer 10 accesses hardware by using several interfaces, thereby unifying an invoking manner. It should be understood that the Android system layer 10 may provide an application-layer encryption protection for the electronic device, and a security level is relatively low.

In some embodiments, the Android system layer 10 may be divided into four layers, which are respectively an application program layer, an application program framework (framework) layer, an Android runtime (Android runtime) and a system library, and a kernel layer from top to bottom. The application program layer may include a series of application packages, such as a camera, a gallery, a calendar, a call, a map, navigation, WLAN, Bluetooth, music, and short messages. The application program framework layer provides an application programming interface (application programming interface, API) and a programming framework for an application program in the application program layer. In addition, the application program framework layer may include some predefined functions. The system library may include a plurality of functional modules, and the Android runtime is responsible for scheduling and managing an Android system. The kernel layer is a layer between hardware and software. The kernel layer includes at least a display driver, a camera driver, an audio driver, and a sensor driver. Details are not described herein.

### 2. Trusted execution environment TEE 20

The TEE is a concept provided by the global platform (global platform, GP). The TEE is a running environment that coexists with an Android system layer, a rich operating system (rich operating system, rich OS), or the like on a device, and provides a security service for the Android system layer or the rich OS. The TEE has a separate execution space and has a higher security level than the Android system layer or the rich OS.

The TEE is a framework running on the electronic device, and provides security that is between security provided by the Android system layer and security provided by the SOC. For example, for some small-amount payments, security protection strength required by a virtual private network (virtual private network, VPN) or the like of an enterprise is not high, but the payment cannot be directly placed in the Android system layer, to prevent the payment from be attacked due to openness of the Android system layer. Therefore, the TEE may be used to provide security protection for such applications.

In addition, the TEE provides a secure execution environment for a trusted application (trusted application, TA), and also protects TA resource and data confidentiality, integrity, and access permission. In the TEE, all TAs are mutually independent and cannot access each other without authorization.

As shown in FIG. 2, the TEE 20 may provide application program interfaces (application programming interface, API) for various services of the electronic device. Various application programs in the Android system layer 10 each invoke the API of the TEE 20 to enable an operating system to execute a command of the application program. For example, the TEE 20 may provide a key management and calculation service API, a gatekeeper (gatekeeper) service API, a biometric authentication service API, an anti-rollback service API, a root of trust (root of trust) API, and the like. The TEE 20 may further provide the electronic device with services such as a high-bandwidth digital content protection technology (high-bandwidth digital content protection, HDCP), digital rights management (digital rights management, DRM), and a microkernel system. This is not limited in this application.

The gatekeeper (gatekeeper) service is mainly a verification function for a personal identification number (personal identification number, pin) of a user, and provides a function of verifying an input pin code to verify whether a password during registration is correct. If the password is correct, the electronic device is allowed to be started, and the keymaster service and another service are enabled. In addition, the gatekeeper service may implement that the keymaster in the TEE serves as a key storage service of each application of Android, to provide a key generation, storage, and encryption/decryption function, to ensure that a key does not appear in Android memory but in the TEE. If verification of the pin code by the gatekeeper fails, another security service is not enabled. If the keymaster service is not enabled, a key is not generated, and no data of a user in the entire mobile phone can be resolved.

The biometric authentication service is performing personal identity identification by using a physiological feature and a behavior feature that are inherent to a human body, for example, performing personal identity identification by using a physiological feature such as fingerprint information or face feature information or by using a user behavior feature such as sliding, a voice, or a gait. A biometric authentication module of the TEE may further encrypt and store the fingerprint information, the face feature information, the user behavior feature information, and the like that are used for personal identity identification.

In a specific process of operating the HDCP, a transmit end and a receive end each store an available key set. Each key is secretly stored, and the transmit end and the receive end each perform an encryption/decryption operation based on the key. The DRM is used to protect multimedia, for example, a movie, music, audio and a video, and a streaming media file that are encrypted. The TEE may provide encryption protection for the HDCP/DRM

### 3. SOC 30

The system on chip SOC 30 includes the SE 40, a UFS storage controller, an ARM trustzone (ARM trustzone), and the like. The UFS storage controller is a form of the storage component 80 of the electronic device. For the storage component 80, refer to related description in FIG. 1. Details are not described herein again.

As shown in FIG. 2, the SOC 30 may include an advanced reduced instruction set machine (Advanced RISC Machine, ARM) processor and the ARM trustzone (ARM trustzone). It should be understood that the ARM processor may correspond to the CPU 104 of the SOC 30 described in FIG. 1. A running environment provided by the ARM may be referred to as the ARM trustzone (ARM trustzone), corresponds to a TEE, and is used to run a plurality of programs. It should be further understood that the SOC 30 may further include another module or part that is not shown, for example, a component module or component of the system on chip 103 described in FIG. 1. Details are not described herein again.

It should be further understood that the SOC 30 includes a built-in secure element (refer to the SE 105 described in FIG. 1), which is referred to as the SE 40. The SE 40 may provide the secure running environment 70, which is also referred to as "a software running environment of the SE". The secure running environment is used to run a plurality of programs to implement various functions of the SE. The secure running environment may provide a secure operating system (operating system, OS), configured to provide an application access interface, and schedule and load various applications or functions. Details are not described herein. In addition, the secure running environment may further provide mainboard hardware support (board support package, B SP) that supports OS running, and the BSP is configured to load an operating system and schedule an instruction sent by the operating system to hardware. Details are not described herein.

### 4. Peripheral parts such as the sensor 50 and the storage component 80

In addition, for example, as shown in FIG. 2, the system architecture 200 further includes peripheral parts such as the storage component 80 and various sensors 50, for example, a fingerprint sensor and a camera. The fingerprint sensor is configured to collect a fingerprint. The electronic device may use a feature of the fingerprint collected by the fingerprint sensor to implement fingerprint unlocking, access an application lock, take a photo by using the fingerprint, answer an incoming call by using the fingerprint, and so on. The camera is configured to capture a static image or a video. An optical image of an object is generated by using a lens and is projected to a photosensitive element. The photosensitive element converts an optical signal into an electrical signal, and then transmits the electrical signal to an image signal processor (image signal processor, ISP) to convert the electrical signal into a digital image signal. The ISP outputs the digital image signal to a DSP for processing, and the DSP converts the digital image signal into a standard image signal. The ISP and the DSP may be built into the SOC. The sensor 50 may further include a pressure sensor, a gyroscope sensor, an acceleration sensor, a distance sensor, a proximity light sensor, a temperature sensor, an ambient light sensor, a bone conduction sensor, and the like. This is not limited in this application. The storage component 80 may correspond to the storage component 107 described in FIG. 1, for example, including an eMMC, a UFS memory, and the like. Details are not described herein again.

A related element of the chip architecture 200 and an implementation environment for improving a security level in the electronic device are described above. In the existing chip architecture 200, services of the electronic device such as a verification function for a pin code, a biometric authentication password service, and data protection are all currently based on the ARM trustzone provided by the processor, and corresponding software may be implemented in the TEE 20. It should be understood that despite of years of development of the ARM trustzone and the TEE, security of hardware currently is still insufficient and cannot reach a security protection level of a secure chip, software has a vulnerability, and it is difficult to prove that a high security level is reached. An authentication level is an authentication level of a common criteria (common criteria, CC) EAL2+. However, a chip that can support finance-level security can reach a security authentication level of EAL5+ or EAL6+. In a process of using the electronic device, how to improve a security level of a security service of a system, for example, reaching a high security level, is a problem that currently needs to be urgently resolved.

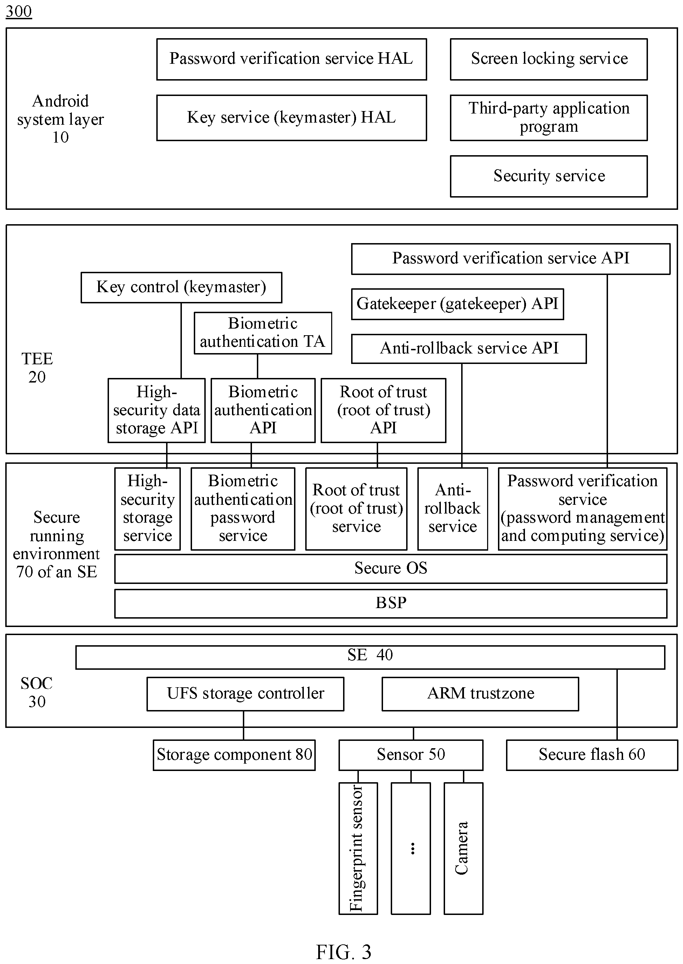

FIG. 3 is a schematic diagram of an example of a system architecture according to this application. As shown in FIG. 3, a system architecture 300 may include an Android system layer 10, a trusted execution environment (trusted execution environment, TEE) 20, an SOC 30, an SE 40 and a secure running environment 70 of the SE, a storage component 80, a sensor 50, a secure flash chip 60, and the like. For the Android system layer 10, the TEE 20, the secure running environment 70 of the SE, the storage component 80, the sensor 50, and the like, refer to corresponding related description in FIG. 2. Details are not described herein again. In addition, the SOC 30 of the system architecture 300 provided in this application includes the built-in secure element SE 40. The SE 40 is coupled to a central processing unit of the SOC 30, and the central processing unit controls the SE 40. The secure running environment 70 of the SE 40 may run a program to provide a plurality of security services in this application.

It should be understood that the "high-security storage service", the "biometric authentication password service", the "root of trust service", the "anti-rollback service", the "key management and calculation service", the "password verification service", and the like that are provided in the secure running environment 70 of the SE and that are listed in FIG. 3 may correspond to different program code or functional modules, and the program code or the functional module is run in the secure running environment 70 of the SE to implement a corresponding security service. This is not limited in this application.

In addition, the system architecture 300 further includes a dedicated secure memory (secure flash) 60. Optionally, in this application, a dedicated secure flash chip may be used, or an independent SE chip may undertake a function of the secure flash chip, or the secure flash is integrated into the SE 105. This is not limited in this application.

In this application, the UFS memory is referred to as a first memory, and the secure flash 60 is referred to as a second memory.

It should be understood that the first memory and the second memory are different memories other than the system on chip SOC 30. Optionally, the first memory may be understood as a memory shared by the SE 40 and the central processing unit, and the second memory is a dedicated memory of the secure element SE 40.

Specifically, the first memory may be a common memory of a mobile phone. For example, a current size of a memory of a mobile phone is usually 64 GB, 132 GB, or the like, and there is relatively large storage space. The first memory in embodiments of this application has 4 MB or 16 MB space in 64 GB or 132 GB. A capacity of this first memory basically has no cost impact on a current relatively large inherent storage of the mobile phone. Even if the capacity of the first memory needs to be increased with an increase in a user requirement in the future, costs of the mobile phone are not affected. The second memory is a dedicated secure memory, and can implement secure storage of data, but usually has small storage space, which is about tens of KB to hundreds of KB. Specifically, the second memory may be an externally authenticated dedicated secure storage (secure flash). In a possible case, the secure flash is placed inside the SE 40 and belongs to a security authentication range, or the secure flash belongs to a device outside the SE 40.

In a data processing process provided in this application, a system architecture may include some or all of the foregoing parts and modules. This is not limited in this application. In this application, at least one of a biometric authentication password service, a password verification service, a key management and calculation service, a root of trust service, an anti-rollback service, and a high-security storage service is implemented in the SE 40 included in the system on chip SOC 30, and a data processing method is provided in combination with storage components such as a secure flash and a UFS memory, to improve a security level of a security service of a system. Detailed description is provided below with reference to the system architecture 300 and related accompany drawings.

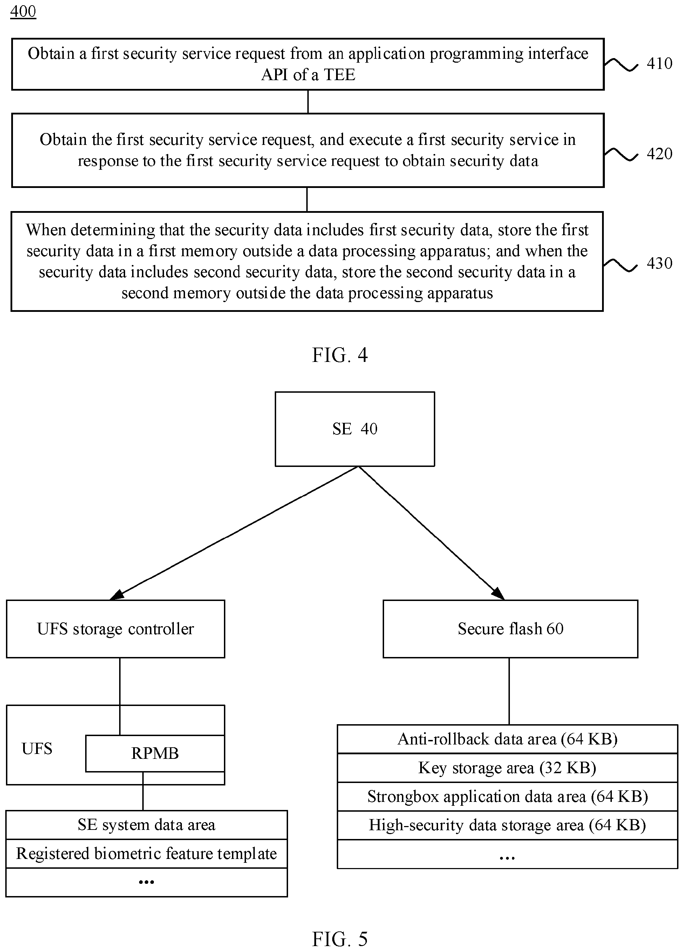

FIG. 4 is a schematic diagram of an example of a data processing method according to an embodiment of this application. The method 400 shows a specific data storage process, and is applied to the foregoing system architecture 300, which includes peripheral parts such as the Android system layer 10, the TEE 20, the SOC 30, the SE 40, the storage component 80, the secure flash 60, and the sensor 50. The method 400 includes the following content. S410: A secure element obtains a first security service request from an application programming interface API of a TEE. Specifically, it may be learned based on the system architecture 300 described in FIG. 3 that the SOC 30 may provide the trusted execution environment TEE 20, and obtain the first security service request by using an API interface of the TEE 20.

Optionally, a first security service includes at least one of a biometric authentication password service, a password verification service, a key management and calculation service, a root of trust service, an anti-rollback service, or a high-security storage service. In this application, the security services listed above may be referred to as "a plurality of security services". In other words, the first security service may refer to any one or more of the plurality of security services. Correspondingly, the first security service request is used to request any one or more of the biometric authentication password service, the password verification service, the key management and calculation service, the root of trust service, the anti-rollback service, and the high-security storage service.

It should be understood that, that the SOC 30 obtains the first security service request may be receiving an operation of a user, and executing the first security service in response to the operation of the user. For example, the first security service request may be generated by a system based on the operation of the user. For example, an intelligent terminal is used as an example. For the biometric authentication password service, if a user needs to unlock a mobile phone, when the user enters fingerprint verification information, face feature information, or other biometric verification information by lightening or without lightening a screen of the intelligent terminal, the Android system layer 10 invokes, based on a biometric authentication operation initiated by the user, an interface (for example, a password verification service HAL) corresponding to the biometric authentication password service, so that the Android system layer 10 transmits the operation of the user to the SOC 30. The SOC 30 determines, based on fingerprint information that is of the user and that is obtained by a fingerprint sensor, to currently start the biometric authentication password service of the intelligent terminal, to generate an instruction for starting the biometric authentication password service, and transmit, to the SE 40 by using a biometric authentication API of the TEE 20, the instruction of the biometric authentication password service. The SE 40 further invokes the biometric authentication API of the TEE 20 to generate a biometric authentication password service request and start the biometric authentication password service.

S420: The secure element obtains the first security service request, and executes the first security service in response to the first security service request to obtain security data. S430: When determining that the security data includes first security data, the secure element stores the first security data in a first memory outside a data processing apparatus; and when the security data includes second security data, the secure element stores the second security data in a second memory outside the data processing apparatus, where the first security data includes recoverable data, and the second security data includes unrecoverable data.

It should be understood that when obtaining the first security service request, that is, determining the first security service that currently needs to be executed, the SE 40 further determines, based on the first security service, data that needs to be stored in a process of executing the service. The data may include only one type of data, such as the first security data or the second security data; or the data may include both the first security data and the second security data. The data that needs to be stored is determined by a service type. Therefore, the SE 40 determines, based on a service request, a type of data corresponding to the service.

For example, when the first security service request is used to request to execute the biometric authentication password service, the SE 40 determines that the first security data is biometric template information (such as fingerprint verification information, face feature information, or other biometric verification information) entered by the user, and the second security data is a key for encrypting a biometric template and information for verifying integrity of the biometric template. When the first security service request is used to request to execute the high-security storage service, the SE 40 determines that only the first security data is currently included, and the first security data may be data at a high security level that the user needs to store in the SE 40.

It should be understood that in related description in FIG. 3, the first memory may be a common memory of a mobile phone, and the second memory is a dedicated secure memory. In embodiments of this application, an implementation process of a security service is described by using an example in which the UFS memory is used as the first memory and the secure flash 60 is used as the second memory. This is not limited in this application.

FIG. 5 is a schematic diagram of an example of a data storage process according to an embodiment of this application. As shown in FIG. 5, the SE 40 may control a process of storing data of different security services. Specifically, the SE 40 may control the UFS storage controller and the secure flash 60. A chip-level independent storage area RPMB is a relatively special partition of an eMMC, and is used to store some core sensitive data. For example, the storage area RPMB of the UFS storage component may be configured to store recoverable data, and the secure flash 60 may be configured to store unrecoverable data related to a plurality of security services in this application.

It should be understood that the "recoverable data" herein may be data that is not afraid of being attacked or erased, or may be renewable data. For example, the storage area RPMB of the UFS storage component may include an SE system data area, a registered biometric feature template data area, and the like. The SE system data area may be used to store chip system data, such as an SE code, where the code may be the same for all mobile phones, and can be recovered even if erased. The registered biometric feature template data area may be used to store a biometric feature template registered by the user, such as fingerprint information and face information. This is not limited in this application.

For example, when the storage area RPMB of the UFS storage component stores preset fingerprint information registered by the user, even if the preset fingerprint information is attacked or erased, the user can further re-register and store new fingerprint information, or the user can further perform matching through a digital password or face feature information verification or in another manner. This does not affect use security of a device. Therefore, this type of data is renewable data.

It should be further understood that the "unrecoverable data" herein may be data that cannot be attacked or erased or data that is not renewable, and may be data related to a plurality of security services in this application. For example, the secure flash 60 may include an anti-rollback data area (64 KB), a key storage area (32 KB), an application data area (64 KB), a high-security data storage area (64 KB), and the like. Specifically, the anti-rollback data area (64 KB) is used to store anti-rollback data; the key storage area (32 KB) is used to store a private key, a certificate, and the like; the application data area (64 KB) is used to store a unique root key and the like of each device; and the high-security data storage area (64 KB) is used to store anti-theft identification information, account balance information, and the like of the user. If this type of unrecoverable data is attacked or erased, a device may become a development board, or user data may be leaked, which affects use security of the device.

A type of data stored in the first memory and the second memory is described above with reference to FIG. 5. A data storage and use process is described below for each of the plurality of security services in this application.

### 1. Password verification service or key management and calculation service

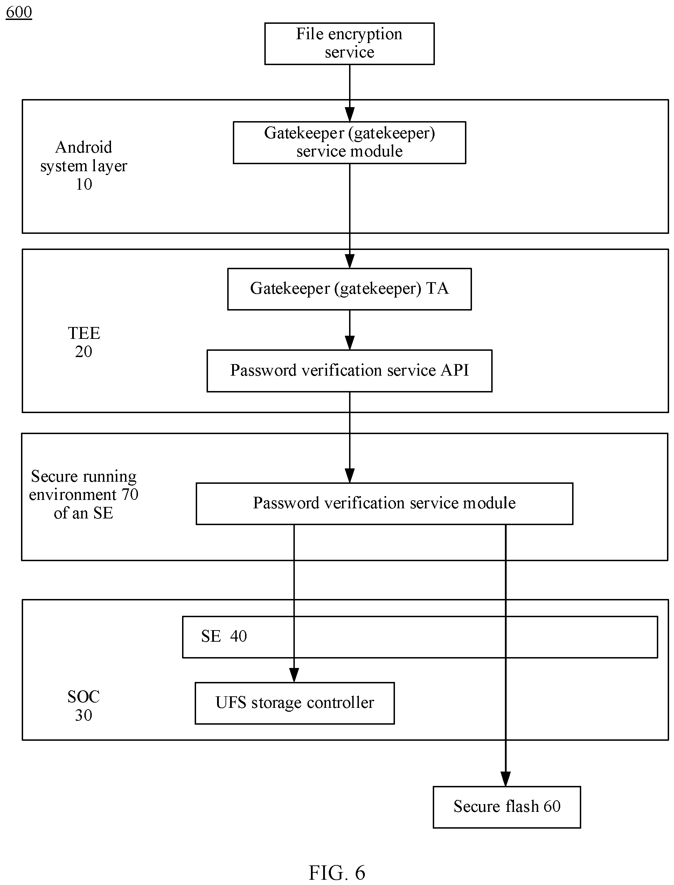

FIG. 6 is a schematic diagram of data processing in a password verification service process according to an embodiment of this application. As shown in FIG. 6, the SE 40 may provide the password verification service. Main logic of the password verification service is management and calculation of an application key (key) and a password authentication process.

A process of encrypting and storing a file of a device is used as an example. A file encryption service is started by a setting operation of a user, and a file encryption password (for example, a digital password) set by the user is transmitted to the SE 40 by a gatekeeper (gatekeeper) service module of the Android system layer 10. The SE 40 encrypts, by using a first key, the file encryption password set by the user, and configures, in the UFS storage controller, ciphertext of the file encryption password set by the user, to further store the ciphertext in an external UFS memory by using the UFS controller, and store, in the secure flash 60, the first key for encrypting the file encryption password set by the user. In addition, the SE 40 may calculate a value of a hash-based message authentication code (hash-based message authentication code, HMAC) based on the encryption password set by the user, and the value is referred to as a first HMAC value. In a process of storing the first key, the calculated first HMAC value is also stored in the secure flash 60.

Correspondingly, in a password verification process in a file decryption process, a file decryption service is started by a digital password entered by the user. The SE 40 calculates a second HMAC value based on the digital password currently entered by the user. In addition, the SE 40 obtains, from the secure flash 60, the first HMAC value stored in previous registration, and compares whether the first HMAC value is the same as the second HMAC value. It should be understood that the HMAC value may be used to verify integrity. For example, when a password verification service module of the SE 40 determines that the first HMAC value is the same as the second HMAC value, it is determined that the ciphertext that is of the password set by the user and that is stored in the external UFS memory is complete.

When the password verification service module of the SE 40 determines that the first HMAC value is the same as the second HMAC value, the SE 40 obtains the previously stored first key from the secure flash 60, and configures the first key in the UFS storage controller, so that the ciphertext that is of the encrypted password set by the user and that is stored in the external UFS memory can be obtained by using the UFS controller. Because the UFS controller has the correct first key, the UFS controller can decrypt data read from the UFS memory, to know the file encryption password (such as a digital password) set by the user.

After password authentication succeeds, the SE 40 may output, to a password verification API of the TEE, the file encryption password (for example, a digital password) set by the related user, and the file encryption password is further invoked by an application in the Android system layer by using the password verification API, to further decrypt the file, and so on. In the foregoing technical solution, functions such as file encryption, password matching and verification may be integrated into the SE to support a security service of a system of a device such as a mobile phone, thereby improving a security level.

### 2. Biometric authentication password service

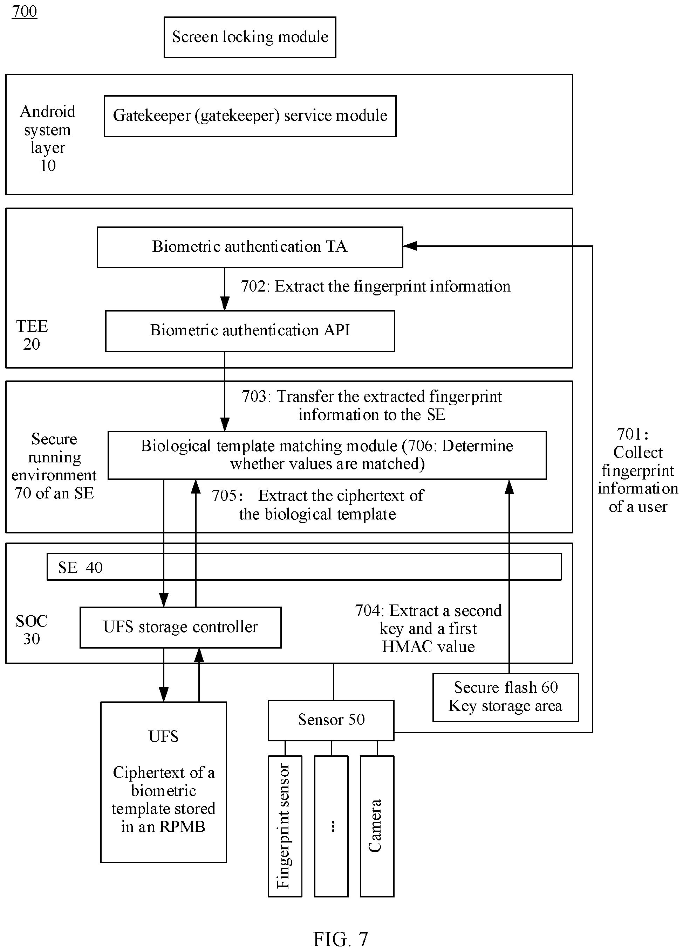

FIG. 7 is a schematic diagram of data processing in a biometric authentication password service process according to an embodiment of this application. As shown in FIG. 7, the SE 40 may provide the biometric authentication password service.

A process of locking and unlocking a screen of a device is used as an example. A screen locking service is started by a setting operation of a user, and a lock screen password (for example, fingerprint information, face information, or the like that is entered during registration of the user is used as the lock screen password) is transmitted to the SE 40 by a gatekeeper (gatekeeper) service module of the Android system layer 10. The SE 40 encrypts, by using a second key, the lock screen password entered during registration of the user, and configures, in the UFS storage controller, ciphertext of the encrypted lock screen password entered during registration of the user, to further store the ciphertext in an external UFS memory by using the UFS controller, and store, in the secure flash 60, the second key for encrypting the lock screen password. In addition, the SE 40 may calculate a first HMAC value based on the lock screen password entered during registration of the user. In a process of storing the first key, the calculated first HMAC value is also stored in the secure flash 60.

Correspondingly, in an unlocking verification process, an unlocking service is started by an unlocking password (for example, fingerprint information, face information, or the like is used as the unlocking password) currently entered by the user. For example, fingerprint unlocking is used as an example. When the user is in contact with a fingerprint sensor to enter fingerprint information, a biometric authentication TA of the TEE 20 extracts feature from a currently collected fingerprint, and sends extracted fingerprint information to the SE 40. The SE 40 calculates a second HMAC value based on the fingerprint information currently entered by the user. In addition, the SE 40 obtains, from the secure flash 60, the first HMAC value stored in previous registration, and compares whether the first HMAC value is the same as the second HMAC value. It should be understood that the HMAC value may be used to verify integrity, determine whether the lock screen password is tampered with, and so on. For example, when a password verification service module of the SE 40 determines that the first HMAC value is the same as the second HMAC value, it is determined that the ciphertext that is of the lock screen password entered during registration of the user and that is stored in the external UFS memory is complete.

When the biometric template matching module of the SE 40 determines that the first HMAC value is the same as the second HMAC value, the SE 40 obtains the previously stored second key from the secure flash 60, and obtains, from the external UFS memory by using the UFS controller, the previously stored ciphertext of the lock screen password entered during registration of the user. The SE 40 decrypts, into an internal RAM based on the second key, the ciphertext of the lock screen password entered during registration of the user. The SE 40 then compares currently entered fingerprint information with fingerprint information that is in the lock screen password entered during registration of the user and that is obtained through decryption, to perform matching. If the matching succeeds, the device is unlocked.

For example, when the user enters fingerprint information and uses the fingerprint information as the lock screen password after registration, a process of unlocking by the user may specifically include the following steps. S701: After the user starts the unlocking service, the sensor 50 (for example, a fingerprint collection sensor) obtains the fingerprint information of the user. S702: The biometric authentication TA of the TEE 20 extracts a feature from a currently collected fingerprint, and transmits, to the SE 40 by using the API, the obtained fingerprint information currently entered by the user. S703: The biometric template matching module of the SE 40 obtains the fingerprint information entered by the user. S704: The SE 40 obtains, from the secure flash 60, a second key for encrypting a previously registered lock screen password and a corresponding first HMAC value. S705: The SE 40 obtains stored ciphertext data of the registered lock screen password from the external UFS memory by using the UFS controller. S706: The SE 40 calculates a second HMAC value based on the fingerprint information currently entered by the user. In addition, the SE 40 obtains, from the secure flash 60, the first HMAC value stored in previous registration, and compares whether the first HMAC value is the same as the second HMAC value. When the biometric template matching module of the SE 40 determines that the first HMAC value is the same as the second HMAC value, the SE 40 obtains the previously stored second key from the secure flash 60, and obtains, from the external UFS memory by using the UFS controller, the previously stored ciphertext of the lock screen password entered during registration of the user. The SE 40 decrypts, into the internal RAM based on the second key, the ciphertext of the lock screen password entered during registration of the user. The SE 40 then compares currently entered fingerprint information with fingerprint information that is in the lock screen password entered during registration of the user and that is obtained through decryption, to perform matching. When determining that the matching succeeds, the SE 40 unlocks the device.

It should be understood that ciphertext of a biometric template may be stored in the RPMB of the UFS memory, but a second key for encrypting the biometric template is stored in the secure flash 60. In a decryption process, the SE 40 decrypts, into the internal RAM of the SE 40, the biometric template ciphertext during registration. When a screen of a system is locked and the system sleeps, the UFS storage controller is powered off. If the second key is stored in the UFS memory, the second key is lost. In this embodiment, loss may be prevented from occurring.

It should be further understood that when the user performs unlocking by using a fingerprint or a face, the biometric authentication TA of the TEE 20 extracts a feature from a collected image, and sends an extracted feature to the SE 40. In the SE 40, the currently extracted feature is matched with a template during registration of the user and is verified. If verification succeeds, a result indicating that verification succeeds is returned to the Android system layer 10, and a screen locking application of the Android system layer invokes the result, so that the system is unlocked successfully. It should be further understood that in this application, the first key and the second key are merely for distinguishing in description. In the foregoing described password verification service or key management and calculation service, the first key is used to encrypt the file encryption password set by the user. When the biometric authentication password service is described, the second key is used to encrypt the lock screen password entered during registration of the user. The first key and the second key may be the same or may be different. For example, for each security service, keys for different services may be calculated based on the key management and calculation service provided by the SE 40, and calculation methods may be the same or may be different. This is not limited in this application.

In the foregoing technical solution, a biometric authentication function may be integrated into the SE to support a security verification service and an unlocking service of a device such as a mobile phone, thereby improving use security of the device.

### 3. Root of Trust service

In this application, the root of trust service may be provided by the SE, for example, preconfiguring a device certificate and a key. In the future, a secure channel may be established to a corresponding cloud service, to ensure reliable communication between the root of trust service and the cloud server, and ensure confidentiality, integrity, and nonrepudiation of a message. Specifically, a certificate and a private key of an original equipment manufacturer (original equipment manufacturer, OEM) or a cloud operator are preconfigured in production. For example, integrity protection may be provided by relying on a security start function in the root of trust service, to ensure that a device starts in a security state. The root of trust service may also protect confidentiality and prevent cloning by using a powerful encryption technology. In a process of establishing the secure channel to the cloud server to communicate with the cloud server, a preconfigured certificate and private key are used as a basis to help a system implement various security functions, for example, protecting and controlling use of a stored encryption key, performing encryption acceleration to improve performance of a secure operation, limiting access of an authorized entity, and so on. The preconfigured certificate and private key may be stored in the SE, to ensure security of the certificate and the private key.

### 4. Anti-rollback service

The SE may further provide the anti-rollback service for an application. For example, for the anti-rollback service, an anti-rollback value is stored in the secure flash 60. It should be understood that in this application, based on the description in FIG. 5, the secure flash 60 serving as the second memory is divided into a plurality of areas, and all of the plurality of areas correspond to different security service types. When storing the second security data in the second memory outside the data processing apparatus, SE 40 stores, in an area corresponding to each security service type, the second security data corresponding to the security service.

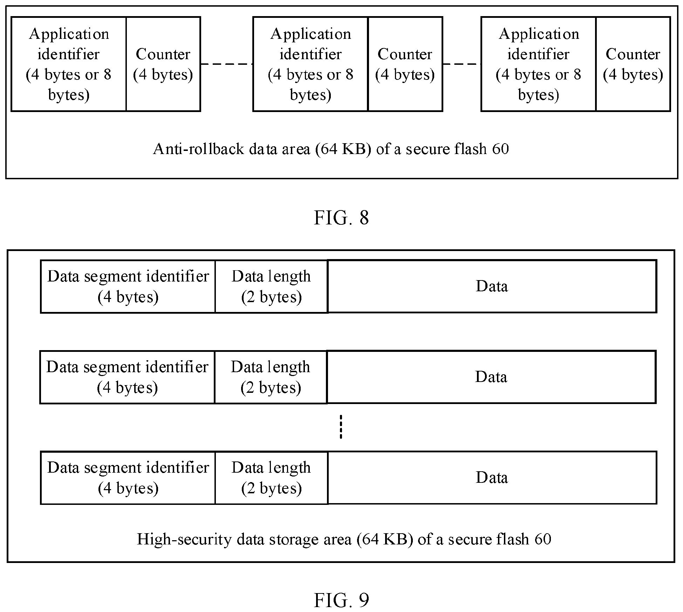

For the anti-rollback service, the anti-rollback data area (64 KB) in the secure flash 60 in FIG. 5 may be further divided, as shown in FIG. 8. FIG. 8 is a schematic diagram of an example of division of an anti-rollback data area according to an embodiment of this application. As shown in FIG. 8, for each application, different areas are divided in the anti-rollback data area of the secure flash.

Optionally, the area of the anti-rollback service further includes a first sub-area and a second sub-area. When executing the anti-rollback service, the SE 40 determines that the second security data includes an identifier and a count value of the anti-rollback service, where the count value is used to determine a quantity of hardware attacks; and stores the identifier of the anti-rollback service in the first sub-area, and stores the count value in the second sub-area.

For example, all applications have different application identifiers (4 bytes or 8 bytes), and each application has a 4-byte counter value (monotonic counter). As shown in FIG. 8, the application identifier of each application is stored in the first sub-area, and the count value for each application is stored in the second sub-area. When a specific application invokes an anti-rollback service API of the TEE 20, an application identifier (for example, an application ID) is input to search the anti-rollback data area of the secure flash for the application identifier. If the application identifier already exists, the application identifier is found, a corresponding counter value is increased by 1, and the value is returned to the application. Alternatively, if the application identifier does not exist, a new application identifier is added, an application identifier field is set to an ID of the application, and a counter is set 1.

For example, a process of registering a fingerprint by a user is used as an example to describe an application manner of the anti-rollback service. For fingerprint registration corresponding to a first ID, a secure counter of the first ID is invoked to record a quantity of times of registering the fingerprint by the user. The user registers a first fingerprint as an unlocking fingerprint for the first time, and re-enters a second fingerprint as an unlocking fingerprint for the second time, and a count value of the secure counter of the first ID is increased by 1. By analogy, each time the user re-registers and re-enters a fingerprint, the count value of the secure counter of the first ID is increased by 1 based on a previous count value. In this process, the anti-rollback service can ensure that the count value records a quantity of times of re-registering and re-entering a fingerprint by the user, ensure that when the count value is 3, neither the first fingerprint in the first time nor the second fingerprint in the second time can be used for unlocking, and ensure that a current unlocking fingerprint is a third fingerprint corresponding to the count value 3.

It should be understood that the count value of the counter monotonically increases, and cannot be tampered with or reset. Therefore, the counter may be understood as a secure counter for a plurality of applications to prevent the application from being attacked, and prevent an application from being rolled back in a use process or prevent data from rolling back. It should be further understood that the anti-rollback service may correspond to a plurality of different applications. The anti-rollback service of the SE 40 can be invoked with reference to different scenarios in a use process of a device, to ensure normal and secure use of the application.

### 5. High-security storage service

For the high-security storage service, data of the high-security storage service is stored in a secure flash, to prevent the data from being attacked or erased. In this application, based on the description in FIG. 5, the secure flash 60 serving as the second memory is divided into a plurality of areas, and the plurality of areas include an area corresponding to the high-security storage service.

For the high-security storage service, the high-security data area (64 KB) in the secure flash 60 in FIG. 5 may be further divided, as shown in FIG. 9. FIG. 9 is a schematic diagram of an example of division of a high-security data storage area according to an embodiment of this application. A management manner of the high-security data storage area is shown in FIG. 9. The area of the high-security storage service further includes a first sub-area, a second sub-area, and a third sub-area. When executing the high-security storage service, the SE 40 may determine that the second security data includes identification information of a data segment of the high-security storage service, length information of the data segment of the high-security storage service, and content of the data segment of the high-security storage service; and store the identification information of the data segment of the high-security storage service in the first sub-area, store the length information of the data segment of the high-security storage service in the second sub-area, and store the content of the data segment of the high-security storage service in the third sub-area. Optionally, the first sub-area may include identification information used to store 4 bytes of each data segment, the second sub-area may include data length information used to store 2 bytes, and the third sub-area may be a storage area for storing a valid data. When a specific application obtains its own data, identification information and length information of a data segment are input, and the high-security data service transmits valid data to the TA of the TEE for use, and then delivers the valid data to the application, to prevent the valid data from being attacked by hardware. For example, a process of storing an anti-theft identifier of a mobile phone is used as an example to describe a process of the high-security storage service. For an anti-theft application, an ID of a corresponding anti-theft identifier, a length of the anti-theft identifier, and data of the anti-theft identifier are separately stored in specific sub-areas described above. For example, data is "0X55a", where "0X" is the ID of the anti-theft identifier, the length is 55, and the anti-theft identifier is "a". After a mobile phone of a user is lost, the anti-theft identifier is transmitted to a server of a mobile phone device manufacturer, so that the mobile phone is in an unusable state. After the mobile phone is found, data in the high-security data storage area is changed, for example, changing from "0X55a" to "0X550", which indicates that the mobile phone ends a stolen or lost state and can be used normally. Alternatively, for example, information such as an XX bank balance or a bus card balance of a user is also stored in the high-security data storage area, to ensure that the data cannot be obtained or tampered with, thereby improving a security level.

It should be understood that the data area management manners for the high-security storage service and the anti-rollback service are described above, and are used as examples rather than limitations. There may be another possible data area management manner. Management manners for data areas of different services are not limited in this application.

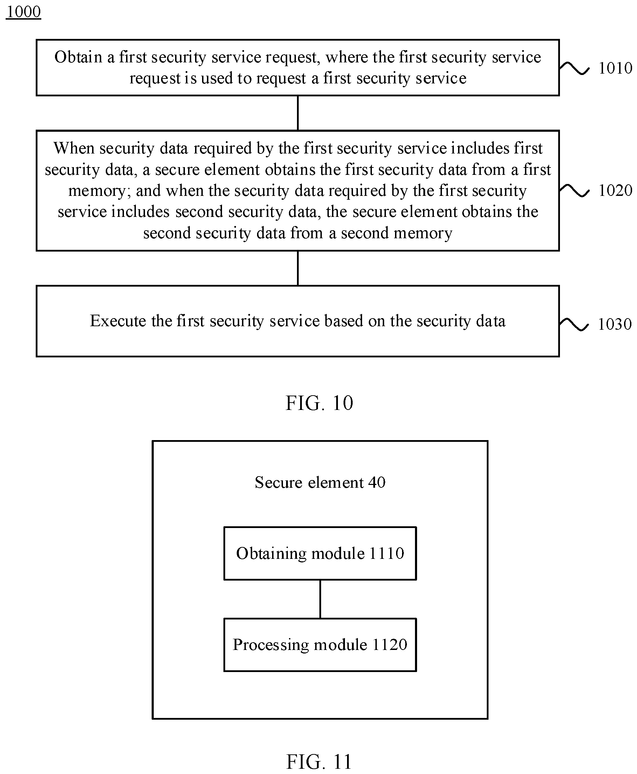

In conclusion, data processing processes of different security services are described above. Corresponding to a data storage process, different security service processes each further include a data reading process and a security service execution process. FIG. 10 is a schematic diagram of another example of a data processing method according to an embodiment of this application. The method 1000 shows a specific data obtaining process, and is applied to the foregoing system architecture 300, which includes peripheral parts such as the Android system layer 10, the TEE 20, the SOC 30, the SE 40 and the secure running environment 70 of the SE, the storage component 80, the secure flash 60, and the sensor 50. The method 1000 includes the following content.

S1010: A secure element obtains a first security service request, where the first security service request is used to request a first security service. It should be understood that the first security service may include at least one of a biometric authentication password service, a password verification service, a key management and calculation service, a root of trust service, an anti-rollback service, and a high-security storage service. In this application, the security services may be referred to as "a plurality of security services". In other words, the first security service may refer to at least one of the plurality of security services. Correspondingly, the first security service request is used to request at least one of the biometric authentication password service, the key management and calculation service, the root of trust service, the anti-rollback service, and the high-security storage service.

S1020: When security data required by the first security service includes first security data, the secure element obtains the first security data from a first memory; and when the security data required by the first security service includes second security data, the secure element obtains the second security data from a second memory. It should be understood that the first security data includes recoverable data of the chip system, and the second security data includes unrecoverable data related to the first security service.

S1030: The secure element executes the first security service based on the security data. The first memory and the second memory are different memories other than the secure element. Optionally, the first memory may be a common memory of a mobile phone, and the second memory is a dedicated secure memory.

In the description in FIG. 4 to FIG. 9, for different security services, a data storage and data obtaining process and a process of executing different security services are separately described, and a data obtaining process and a process of executing different security services in FIG. 10 are not described herein again.

It should be understood that the plurality of security services described above are not strictly demarcated, and may be combined with each other when a user uses a specific application, and are simultaneously executed in a use process of the application; or may exist separately in a specific function of a specific application. This is not limited in this application. For example, in a process in which a user performs unlocking by using a fingerprint, the SE 40 may execute the biometric authentication password service, the key management and calculation service, and the like. In a process in which a user stores an anti-theft identifier of a mobile phone, the SE 40 may execute the high-security storage service.

The method provided in embodiments of this application is separately described above with reference to FIG. 2 to FIG. 10 from two aspects: data storage and data obtaining, and execution of a security service. According to the data writing and data reading method provided in this application, an architecture and a procedure design in which an SE integrated into an SOC is used to support a security service of a mobile phone system are proposed for the first time, so that a security system of a chip at a high security level is applied to data protection of a device such as a mobile phone. Specifically, the secure element SE is enabled to integrate functions such as a biometric authentication password service, a password verification service, a password matching and verification service, a file encryption service, a root of trust service, a high-security storage service, and an anti-rollback service, to implement a security service in the SE, and store a certificate for invoking by a TEE TA. In addition, in different security services, a plurality of possible data area management manners for a secure flash are provided, and a plurality of sub-areas are obtained through division to store data of different security services. For example, for the anti-rollback service, anti-rollback data (each application has 4 bytes) is stored, a crucial key and device certificate are stored, high-security data is stored, data of a third-party application is stored, and so on. The SE is combined with a security-level chip to improve a security level and user experience.

FIG. 11 is a schematic diagram of composition of an example of a secure element SE 40 according to an embodiment of this application. The secure element SE 40 may run a secure running environment 70. As shown in FIG. 11, the secure element may correspond to the SE 40 in FIG. 3, FIG. 5, FIG. 6, and FIG. 7. As shown in FIG. 11, the secure element may include an obtaining module 1110, configured to obtain a first security service request, where the first security service request is used to request a first security service; and a processing module 1120, configured to: execute the first security service in response to the first security service request to obtain security data. When the security data includes first security data, the processing module 1120 stores the first security data in a first memory. When the security data includes second security data, the processing module 1120 stores the second security data in a second memory. The first security data includes recoverable data, the second security data includes unrecoverable data, and the first memory and the second memory are different memories.

It should be understood that the obtaining module 1110 and the processing module 1120 may be implemented by using software, hardware, or a combination of software and hardware. When the two modules are implemented by using software, the two modules may run on the CPU 106 in FIG. 1.

In a possible implementation, the first security service includes at least one of a biometric authentication password service, a password verification service, a key management and calculation service, a root of trust service, an anti-rollback service, or a high-security storage service. In a possible implementation, the second memory includes a plurality of areas, and the processing module 1120 is specifically configured to store the second security data in an area in the plurality of areas that corresponds to the first security service. In a possible implementation, the first security service includes the anti-rollback service, the security data includes the second security data, the second security data includes an identifier and a count value of the anti-rollback service, the count value is used to determine a quantity of hardware attacks, and an area in the plurality of areas that corresponds to the anti-rollback service further includes a first sub-area and a second sub-area. The processing module 1120 is specifically configured to: store the identifier of the anti-rollback service in the first sub-area, and store the count value in the second sub-area.

In a possible implementation, the first security service includes the biometric authentication password service, the security data includes the first security data and the second security data, the first security data includes ciphertext, and the second security data includes a first key and a message authentication code MAC value. The processing module 1120 is configured to: obtain biometric feature information of a first user; encrypt the biometric feature information by using the first key to obtain the ciphertext; determine the MAC value based on the biometric feature information; and store the ciphertext in the first memory, and store the first key and the MAC value in an area in the plurality of areas that corresponds to the biometric authentication password service.

In a possible implementation, the first security service includes the high-security storage service, the security data includes the second security data, the second security data includes identification information of a data segment of the high-security storage service, length information of the data segment, and content of the data segment, and each of the plurality of areas that corresponds to the high-security storage service further includes a first sub-area, a second sub-area, and a third sub-area. The processing module 1120 is configured to: determine the identification information, the length information, and the content of the data segment; and store the identification information in the first sub-area, store the length information in the second sub-area, and store the content in the third sub-area.

The foregoing describes functions or operations that may be performed by the secure element 40 in a data storage process. Specifically, the secure element 40 may perform the method and the step described in FIG. 4. Correspondingly, in a process of obtaining data and executing a security service, the secure element 40 may further perform the method and the step described in FIG. 10. Specifically, the obtaining module 1110 is configured to obtain a first security service request, where the first security service request is used to request a first security service. When security data required by the first security service includes first security data, the obtaining module 1110 obtains the first security data from a first memory; and when the security data required by the first security service includes second security data, the obtaining module 1110 obtains the second security data from a second memory.

The processing module 1120 is configured to execute the first security service. The first security data includes recoverable data, the second security data includes unrecoverable data, and the first memory and the second memory are different memories. In a possible implementation, the first security service includes an anti-rollback service, the security data includes the second security data, the second security data includes an identifier and a count value of the anti-rollback service, the count value is used to determine a quantity of hardware attacks, and an area in a plurality of areas that corresponds to the anti-rollback service further includes a first sub-area and a second sub-area. The obtaining module 1110 is specifically configured to: obtain the identifier of the anti-rollback service from the first sub-area, and obtain the count value from the second sub-area.

In a possible implementation, the first security service includes a biometric authentication password service, the security data includes the first security data and the second security data, the first security data includes ciphertext, and the second security data includes a first key and a message authentication code MAC value. The processing module 1120 is specifically configured to: decrypt the ciphertext based on the first key to obtain biometric feature information of a first user; verify integrity of the biometric feature information based on the MAC value to obtain a verification result; when the verification result is that the biometric feature information is complete, determine, based on the biometric feature information and biometric feature information that is entered by a to-be-verified user, whether the to-be-verified user is the first user; and when the to-be-verified user is the first user, biometric authentication verification succeeds; or when the to-be-verified user is not the first user, biometric authentication verification fails.

In a possible implementation, the first security service includes a high-security storage service, the security data includes the second security data, the second security data includes identification information of a data segment of the high-security storage service, length information of the data segment, and content of the data segment, and an area in the plurality of areas that corresponds to the high-security storage service further includes a first sub-area, a second sub-area, and a third sub-area. The obtaining module 1110 is specifically configured to: obtain the identification information from the first sub-area, obtain the length information from the second sub-area, and obtain the content of the data segment from the third sub-area.

It should be noted that, all related content of the steps in the foregoing method embodiments can be cited in function description of corresponding functional modules, and details are not described herein again.

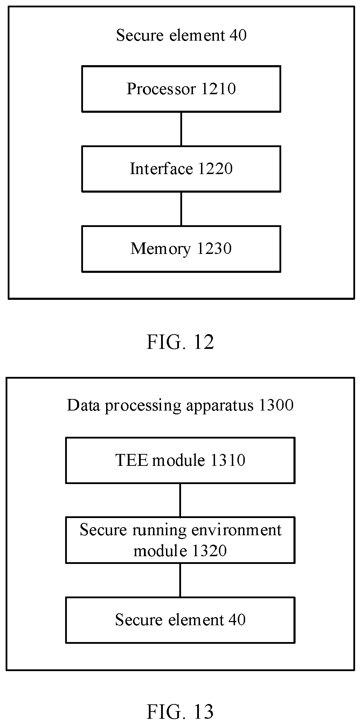

FIG. 12 is a schematic diagram of composition of an example of a secure element 40 according to an embodiment of this application. As shown in FIG. 12, the secure element may correspond to the SE 40 in FIG. 3, FIG. 5, FIG. 6, and FIG. 7, or correspond to the secure element 40 in FIG. 11. For example, the secure element 40 may include a processor 1210 and an interface 1220. The interface 1220 is coupled to the processor 1210. The processor 1210 is configured to implement a function of the SE 40 in FIG. 3, FIG. 5, FIG. 6, FIG. 7, or FIG. 11, for example, executing at least one of a biometric authentication password service, a password verification service, a key management and calculation service, a root of trust service, an anti-rollback service, or a high-security storage service, or performing another data processing process. For example, the processor 1210 may correspond to the CPU 106 in FIG. 1. The interface 1220 is used by the secure element 40 to communicate with the outside, and may include, for example, a communications interface between the secure element 40 and the PMU chip 101, the secure flash chip 109, or the CPU 104 in FIG. 1. For example, the processor 1210 communicates with the CPU 104 by using the interface 1220.

In a possible implementation, the secure element 40 may further include a memory 1230. The memory 1230 is configured to store necessary program instructions and necessary data. In this application, the processor 1210, the interface 1220, and the memory 1230 cooperate with each other to execute computer instructions, so that the secure element 40 performs the data processing method provided in embodiments of this application. For example, the memory 1230 may include the RAM or the ROM in FIG. 1. Details are not described herein.

FIG. 13 is a schematic diagram of composition of an example of a data processing apparatus according to an embodiment of this application. As shown in FIG. 13, the data processing apparatus 1300 includes a trusted execution environment TEE module 1310 and a secure running environment module 1320 of a secure element SE. The TEE module 1310 communicates with the secure running environment module 1320 by using an application programming interface API, the TEE module 1310 can obtain a first security service request, and send the first security service request to the secure running environment module 1320 by using the API, where the first security service request is used to request a first security service. In response to the first security service request, the secure running environment module 1320 executes the first security service.

It should be understood that the TEE module 1310 may correspond to the TEE 20 in FIG. 3, and the secure running environment module 1320 may correspond to the secure environment 70 in FIG. 3. Details are not described herein.

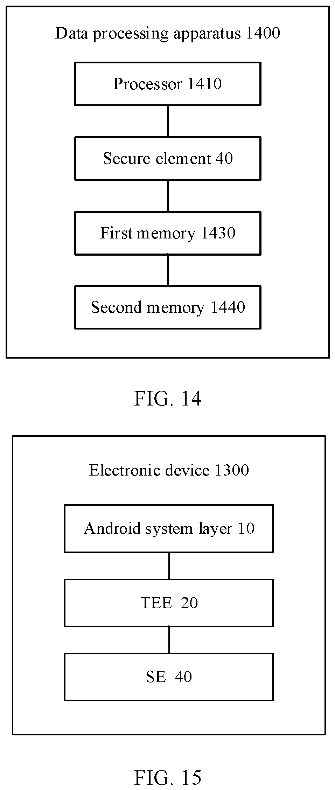

FIG. 14 is a schematic diagram of composition of another example of a data processing apparatus according to an embodiment of this application. As shown in FIG. 14, the data processing apparatus 1400 includes at least one processor 1410, a secure element 40, a first memory 1430, and a second memory 1440. The first memory 1430 and the second memory 1440 are different memories other than the secure element 40. In a possible implementation, the first memory is a memory shared by the secure element and the at least one processor, and the second memory is a dedicated secure flash of the secure element.

In this application, the processor 1410 is configured to provide a trusted execution environment TEE. The at least one processor 1410, the secure element 40, the first memory 1430, and the second memory 1440 cooperate with each other to implement at least one of a biometric authentication password service, a password verification service, a key management and calculation service, a root of trust service, an anti-rollback service, or a high-security storage service described in FIG. 3, FIG. 5, FIG. 6, FIG. 7, or FIG. 11, or performing another data processing process. For a specific function of each component in FIG. 14, refer to the description in the embodiment corresponding to FIG. 1 or another accompanying drawing. For example, the components respectively correspond to the CPU 104, the SE 105, the processor 107, and the secure flash chip 109 in FIG. 1. Details are not described herein again.

FIG. 15 is a schematic diagram of composition of an example of an electronic device according to an embodiment of this application. As shown in FIG. 15, the electronic device 1500 may be an electronic device including the secure element 40 described in FIG. 11 or FIG. 12, or an electronic device including the data processing apparatus described in FIG. 13 or FIG. 14. For example, the electronic device 1500 may include an Android system layer 10, a TEE 20, and an SE 40. The Android system layer 10, the TEE 20, and the SE 40 cooperate with each other to execute computer instructions, to enable the electronic device to perform the data processing method provided in embodiments of this application. For specific description, refer to the foregoing description, for example, refer to corresponding description in FIG. 3.

It may be understood that to implement the foregoing functions, the electronic device includes corresponding hardware and/or software modules for performing the functions. Algorithm steps in the examples described with reference to embodiments disclosed in this specification can be implemented by hardware or a combination of hardware and computer software in this application. Whether a function is performed by hardware or hardware driven by computer software depends on particular applications and design constraints of the technical solutions. A person skilled in the art may use a different method to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

When the functions in the foregoing embodiments are implemented in a form of a software module or a functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device or a computing processor, as the foregoing described secure element, to perform all or some of the steps of the methods described in embodiments of this application.

The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing description is merely a specific implementation of this application, but is not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data processing apparatus, comprising:
at least one processor, configured to: provide a trusted execution environment TEE, and obtain a first security service request by using an application programming interface API of the TEE, wherein the first security service request is used to request a first security service; and
a secure element, configured to:
obtain the first security service request from the at least one processor;
execute the first security service in response to the first security service request to obtain security data;
when the security data comprises first security data, store the first security data in a first memory outside the data processing apparatus; and
when the security data comprises second security data, store the second security data in a second memory outside the data processing apparatus, wherein
the first security data comprises recoverable data, the second security data comprises unrecoverable data, and the first memory and the second memory are different memories.

2. The data processing apparatus according to claim 1, wherein the first security service comprises at least one of a biometric authentication password service, a password verification service, a key management and calculation service, a root of trust service, an anti-rollback service, or a high-security storage service.

3. The data processing apparatus according to claim 1 or 2, wherein the second memory comprises a plurality of areas, and
when storing the second security data in the second memory outside the data processing apparatus, the secure element is configured to store the second security data in an area in the plurality of areas that corresponds to the first security service.

4. The data processing apparatus according to claim 3, wherein the first security service comprises the anti-rollback service, the security data comprises the second security data, the second security data comprises an identifier and a count value of the anti-rollback service, the count value is used to determine a quantity of hardware attacks, and an area in the plurality of areas that corresponds to the anti-rollback service further comprises a first sub-area and a second sub-area; and
the secure element is specifically configured to:
determine the identifier and the count value of the anti-rollback service; and
store the identifier of the anti-rollback service in the first sub-area, and store the count value in the second sub-area.

5. The data processing apparatus according to claim 3, wherein the first security service comprises the biometric authentication password service, the security data comprises the first security data and the second security data, the first security data comprises ciphertext, and the second security data comprises a first key and a message authentication code MAC value; and
the secure element is specifically configured to:
obtain biometric feature information of a first user;
encrypt the biometric feature information by using the first key to obtain the ciphertext;
determine the MAC value based on the biometric feature information; and
store the ciphertext in the first memory, and store the first key and the MAC value in an area in the plurality of areas that corresponds to the biometric authentication password service.

6. The data processing apparatus according to claim 3, wherein the first security service comprises the high-security storage service, the security data comprises the second security data, the second security data comprises identification information of a data segment of the high-security storage service, length information of the data segment, and content of the data segment, and an area in the plurality of areas that corresponds to the high-security storage service further comprises a first sub-area, a second sub-area, and a third sub-area; and
the secure element is specifically configured to:
determine the identification information, the length information, and the content of the data segment; and
store the identification information in the first sub-area, store the length information in the second sub-area, and store the content in the third sub-area.

7. The data processing apparatus according to any one of claims 1 to 6, wherein the first memory is a memory shared by the secure element and the at least one processor, and the second memory is a dedicated secure memory of the secure element.

8. A data processing apparatus, comprising:
at least one processor, configured to: provide a trusted execution environment TEE, and obtain a first security service request by using an application programming interface API of the TEE, wherein the first security service request is used to request a first security service; and
a secure element, configured to:
obtain the first security service request from the at least one processor;
when security data required by the first security service comprises first security data, obtain the first security data from a first memory outside the data processing apparatus;
when the security data required by the first security service comprises second security data, obtain the second security data from a second memory outside the data processing apparatus; and
execute the first security service, wherein
the first security data comprises recoverable data, the second security data comprises unrecoverable data, and the first memory and the second memory are different memories.

9. The data processing apparatus according to claim 8, wherein the first security service comprises at least one of a biometric authentication password service, a password verification service, a key management and calculation service, a root of trust service, an anti-rollback service, or a high-security storage service.

10. The data processing apparatus according to claim 8 or 9, wherein the second memory comprises a plurality of areas, and
when obtaining the second security data from the second memory outside the data processing apparatus, the secure element is configured to obtain the second security data from an area in the plurality of areas that corresponds to the first security service.

11. The data processing apparatus according to claim 10, wherein the first security service comprises the anti-rollback service, the security data comprises the second security data, the second security data comprises an identifier and a count value of the anti-rollback service, the count value is used to determine a quantity of hardware attacks, and an area in the plurality of areas that corresponds to the anti-rollback service further comprises a first sub-area and a second sub-area; and
the secure element is specifically configured to:
obtain the identifier of the anti-rollback service from the first sub-area, and obtain the count value from the second sub-area.

12. The data processing apparatus according to claim 10, wherein the first security service comprises the biometric authentication password service, the security data comprises the first security data and the second security data, the first security data comprises ciphertext, and the second security data comprises a first key and a message authentication code MAC value;
the secure element is specifically configured to:
obtain the ciphertext from the first memory, and obtain the first key and the MAC value from the second memory;
decrypt the ciphertext based on the first key to obtain biometric feature information of a first user;
verify integrity of the biometric feature information based on the MAC value to obtain a verification result;
when the verification result is that the biometric feature information is complete, determine, based on the biometric feature information and biometric feature information that is entered by a to-be-verified user, whether the to-be-verified user is the first user; and
when the to-be-verified user is the first user, biometric authentication verification succeeds; or
when the to-be-verified user is not the first user, biometric authentication verification fails.

13. The data processing apparatus according to claim 10, wherein the first security service comprises the high-security storage service, the security data comprises the second security data, the second security data comprises identification information of a data segment of the high-security storage service, length information of the data segment, and content of the data segment, and an area in the plurality of areas that corresponds to the high-security storage service further comprises a first sub-area, a second sub-area, and a third sub-area; and
the secure element is specifically configured to:
obtain the identification information from the first sub-area, obtain the length information from the second sub-area, and obtain the content of the data segment from the third sub-area.

14. The data processing apparatus according to any one of claims 8 to 13, wherein the first memory is a memory shared by the secure element and the at least one processor, and the second memory is a dedicated secure memory of the secure element.

15. A data processing device, wherein the data processing device comprises the data processing apparatus according to any one of claims 1 to 14, a first memory, and a second memory.

16. A data processing method, comprising:
obtaining a first security service request, wherein the first security service request is used to request a first security service;
executing the first security service in response to the first security service request to obtain security data;
when the security data comprises first security data, storing the first security data in a first memory; and
when the security data comprises second security data, storing the second security data in a second memory, wherein
the first security data comprises recoverable data, the second security data comprises unrecoverable data, and the first memory and the second memory are different memories.

17. The method according to claim 16, wherein the first security service comprises at least one of a biometric authentication password service, a password verification service, a key management and calculation service, a root of trust service, an anti-rollback service, or a high-security storage service.

18. The method according to claim 16 or 17, wherein the second memory comprises a plurality of areas, and the storing the second security data in a second memory comprises:
storing the second security data in an area in the plurality of areas that corresponds to the first security service.

19. The method according to claim 18, wherein the first security service comprises the anti-rollback service, the security data comprises the second security data, the second security data comprises an identifier and a count value of the anti-rollback service, the count value is used to determine a quantity of hardware attacks, and an area in the plurality of areas that corresponds to the anti-rollback service further comprises a first sub-area and a second sub-area; and
the storing the second security data in a second memory comprises:
storing the identifier of the anti-rollback service in the first sub-area, and storing the count value in the second sub-area.

20. The method according to claim 18, wherein the first security service comprises the biometric authentication password service, the security data comprises the first security data and the second security data, the first security data comprises ciphertext, and the second security data comprises a first key and a message authentication code MAC value;
the executing the first security service to obtain security data comprises:
obtaining biometric feature information of a first user;
encrypting the biometric feature information by using the first key to obtain the ciphertext; and
determining the MAC value based on the biometric feature information; and
the storing the first security data in a first memory and storing the second security data in a second memory comprises:
storing the ciphertext in the first memory, and storing the first key and the MAC value in an area in the plurality of areas that corresponds to the biometric authentication password service.

21. The method according to claim 18, wherein the first security service comprises the high-security storage service, the security data comprises the second security data, the second security data comprises identification information of a data segment of the high-security storage service, length information of the data segment, and content of the data segment, and each of the plurality of areas that corresponds to the high-security storage service further comprises a first sub-area, a second sub-area, and a third sub-area;
the executing the first security service to obtain security data comprises:
determining the identification information, the length information, and the content of the data segment; and
the storing the second security data in a second memory comprises:
storing the identification information in the first sub-area, storing the length information in the second sub-area, and storing the content in the third sub-area.

22. A data processing method, comprising:
obtaining a first security service request, wherein the first security service request is used to request a first security service;
when security data required by the first security service comprises first security data, obtaining the first security data from a first memory;
when the security data required by the first security service comprises second security data, obtaining the second security data from a second memory; and
executing the first security service, wherein
the first security data comprises recoverable data, the second security data comprises unrecoverable data, and the first memory and the second memory are different memories.

23. The method according to claim 22, wherein the first security service comprises at least one of a biometric authentication password service, a password verification service, a key management and calculation service, a root of trust service, an anti-rollback service, or a high-security storage service.

24. The method according to claim 22 or 23, wherein the second memory comprises a plurality of areas, and the obtaining the second security data from a second memory comprises:
obtaining the second security data from an area in the plurality of areas that corresponds to the first security service.

25. The method according to claim 24, wherein the first security service comprises the anti-rollback service, the security data comprises the second security data, the second security data comprises an identifier and a count value of the anti-rollback service, the count value is used to determine a quantity of hardware attacks, and an area in the plurality of areas that corresponds to the anti-rollback service further comprises a first sub-area and a second sub-area; and
the obtaining the second security data from a second memory comprises:
obtaining the identifier of the anti-rollback service from the first sub-area, and obtaining the count value from the second sub-area.

26. The method according to claim 24, wherein the first security service comprises the biometric authentication password service, the security data comprises the first security data and the second security data, the first security data comprises ciphertext, and the second security data comprises a first key and a message authentication code MAC value;
the executing the first security service comprises:
decrypting the ciphertext based on the first key to obtain biometric feature information of a first user;
verifying integrity of the biometric feature information based on the MAC value to obtain a verification result;
when the verification result is that the biometric feature information is complete, determining, based on the biometric feature information and biometric feature information that is entered by a to-be-verified user, whether the to-be-verified user is the first user; and
when the to-be-verified user is the first user, biometric authentication verification succeeds; or
when the to-be-verified user is not the first user, biometric authentication verification fails.

27. The method according to claim 24, wherein the first security service comprises the high-security storage service, the security data comprises the second security data, the second security data comprises identification information of a data segment of the high-security storage service, length information of the data segment, and content of the data segment, and an area in the plurality of areas that corresponds to the high-security storage service further comprises a first sub-area, a second sub-area, and a third sub-area; and
the obtaining the second security data from a second memory comprises:
obtaining the identification information from the first sub-area, obtaining the length information from the second sub-area, and obtaining the content of the data segment from the third sub-area.
